# EUROPEAN PATENT APPLICATION

(11) **EP 4 832 597 A1**
(43) Date of publication of application: **28.10.2026**
(21) Application number: 25749034.2
(22) Date of filing: 24.01.2025
(51) Int. Cl.: H04W 52/02, H04W 74/00, H04W 74/0808, H04W 76/15, H04W 84/12

(54) **DYNAMIC POWER SAVING IN DOWNLINK MULTI-USER TRANSMISSION IN WIRELESS LAN SYSTEM**

(30) Priority: 01.02.2024 KR 20240016020
(71) Applicant: LG Electronics Inc., Yeongdeungpo-gu Seoul 07336 (KR)
(72) Inventor: KIM, Geonhwan, Seoul 06772 (KR); CHOI, Jinsoo, Seoul 06772 (KR); JANG, Insun, Seoul 06772 (KR); BAEK, Sunhee, Seoul 06772 (KR); YOON, Yelin, Seoul 06772 (KR); CHA, Dongju, Seoul 06772 (KR)
(74) Representative: Plasseraud IP
(86) International application number: PCT/KR2025/001526
(87) International publication number: WO 2025/165131

(57) **Abstract**

The present disclosure relates to dynamic power saving in downlink multi-user transmission in a wireless LAN system. According to an embodiment of the present disclosure, a method performed by an AP configured to operate in a wireless LAN system comprises the steps of: entering a listening state of a dynamic power save (PS) mode; in the listening state, detecting downlink data to be transmitted to one or more stations (STAs); on the basis of detection of the downlink data to be transmitted, transmitting an initial control frame (ICF) to the one or more STAs, wherein the ICF is for initiating downlink transmission in the dynamic PS mode; and after transmitting the ICF, transmitting the downlink data to the one or more STAs in the frame exchange state of the dynamic PS mode.

## Description

### Technical field

The present disclosure is related to dynamic power save in downlink multi-user transmission in a wireless local area network (WLAN) system.

### Background Art

Next-generation Wi-Fi (e.g., IEEE 802.11be and/or later) aims to support ultra-high reliability in signaling to STAs, and various technologies are being considered to support high throughput, low latency, and extended range. For example, although an AP may be supplied with power at all times, in a network environment in which a plurality of APs exist, the amount of power consumed by the APs is large, and thus power saving of the AP may be required.

### Disclosure of Invention

### Technical Problem

An aspect of the present disclosure is to provide method and apparatus for dynamic power save in downlink multi-user transmission in a WLAN system.

### Solution to Problem

According to an embodiment of the present disclosure, a method performed by an AP configured to operate in a wireless LAN system comprises: entering a listening state of a dynamic power save (PS) mode; detecting, in the listening state, downlink data to transmit to one or more stations (STAs); based on detecting the downlink data to transmit, transmitting an initial control frame (ICF) for initiating a downlink transmission in the dynamic PS mode to the one or more STAs; and after transmitting the ICF, transmitting the downlink data to the one or more STAs in a frame exchange state of the dynamic PS mode.

According to an embodiment of the present disclosure, a method performed by a STA configured to operate in a wireless LAN system comprises: receiving, from an access point (AP), an initial control frame (ICF) for initiating a downlink transmission in a dynamic power save (PS) mode; and after receiving the ICF, receiving downlink data from the AP, wherein the ICF is transmitted from the AP based on the AP detecting the downlink data to transmit to the STA in a listening state of the dynamic PS mode, and wherein the downlink data is transmitted from the AP while the AP is in a frame exchange state of the dynamic PS mode.

In various embodiments, apparatuses implementing the above methods are provided.

### Advantageous Effect

The present disclosure may have various advantageous effects.

For example, when an AP and non-AP STAs operate in a dynamic PS, the AP/STA may operate with a restricted capability/configuration in the listening state in a period other than a period in which a frame exchange is performed, and through this, unnecessary power consumption may be reduced.

For example, when the AP operates in a dynamic PS and the power management mode of at least one non-AP STA may be different, the AP or some STAs may reduce power consumption in the listening state, and some non-AP STAs in the doze state may achieve greater power saving.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

### Brief Description of Drawings

FIG. 1 illustrates an example of a transmitting apparatus and/or receiving apparatus of the present disclosure.
FIG. 2 is a conceptual view illustrating the structure of a wireless local area network (WLAN).
FIG. 3 illustrates a general link setup process.
FIG. 4 illustrates an example of a multi-link (ML).
FIG. 5 illustrates a modified example of a transmitting device and/or a receiving device of the present disclosure.
FIG. 6 illustrates an example of a physical protocol data unit or physical layer (PHY) protocol data unit (PPDU) transmitted/received by an STA of the present disclosure.
FIG. 7 illustrates the layout of resource units (RUs) used for a 20 MHz PPDU.
FIG. 8 illustrates the layout of resource units (RUs) used for 40MHz PPDU.
FIG. 9 illustrates the layout of resource units (RUs) used for an 80MHz PPDU.
FIG. 10 illustrates an operation related to UL-MU.
FIG. 11 illustrates an example of channels used/supported/defined within the 2.4 GHz band.
FIG. 12 illustrates an example of channels used/supported/defined within the 5 GHz band.
FIG. 13 illustrates an example of channels used, supported, and defined within the 6 GHz band.
FIG. 14 illustrates a trigger frame format. The trigger frame format may also be referred to as the structure of a trigger frame.
FIG. 15 shows an example of a random backoff procedure.
FIG. 16 illustrates an example of a procedure related to NAV setting.
FIG. 17 shows an example of per-link power save operation.
FIG. 18 shows an example of power management operation according to an embodiment of the present disclosure.
FIG. 19 shows an example of an EMLSR operation.
FIG. 20 shows an example of a method performed by an AP for dynamic power save according to an embodiment of the present disclosure.
FIG. 21 shows an example of a signal flow between an AP and a STA for dynamic power save according to an embodiment of the present disclosure.
FIG. 22 shows an example of an ICF format for a DL MU transmission in a dynamic PS operation according to an embodiment of the present disclosure.
FIG. 23 shows an example of a response frame format for an ICF in a dynamic PS operation according to an embodiment of the present disclosure.
FIG. 24 shows a first example of a frame sequence for a DL MU transmission in a dynamic PS operation according to an embodiment of the present disclosure.
FIG. 25 shows a second example of a frame sequence for a DL MU transmission in a dynamic PS operation according to an embodiment of the present disclosure.

### Mode for the Invention

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11a/g/n/ac/ax/be/bn standard. In addition, an example of the present disclosure can also be applied to a next-generation wireless LAN standard that enhances the Ultra High Reliability (UHR) standard or IEEE 802.11bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

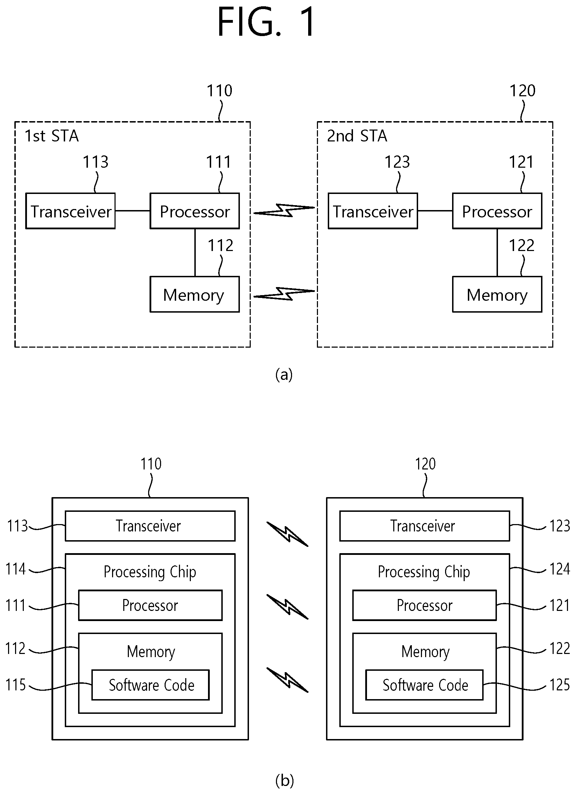

FIG. 1 illustrates an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGON^{®} series of processors made by Qualcomm^{®}, EXYNOS^{®} series of processors made by Samsung^{®}, A series of processors made by Apple^{®}, HELIO^{®} series of processors made by MediaTek^{®}, ATOM^{®} series of processors made by Intel^{®} or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

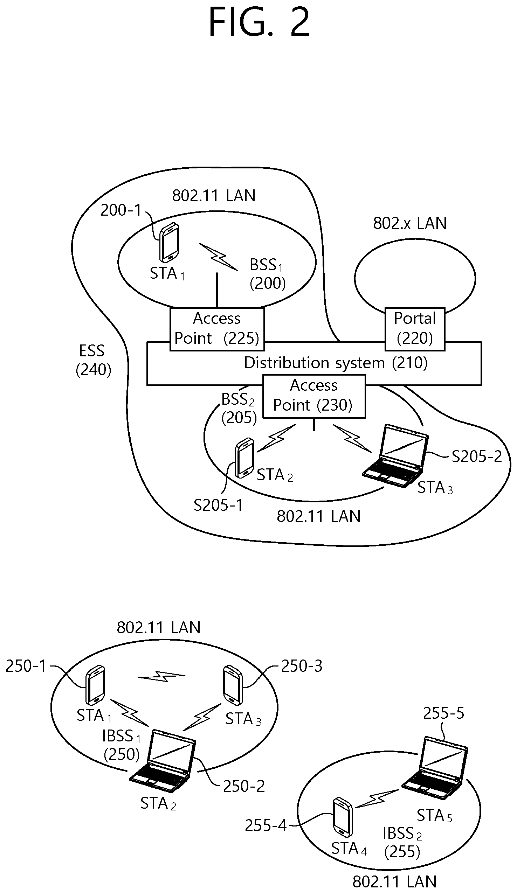

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, APs providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

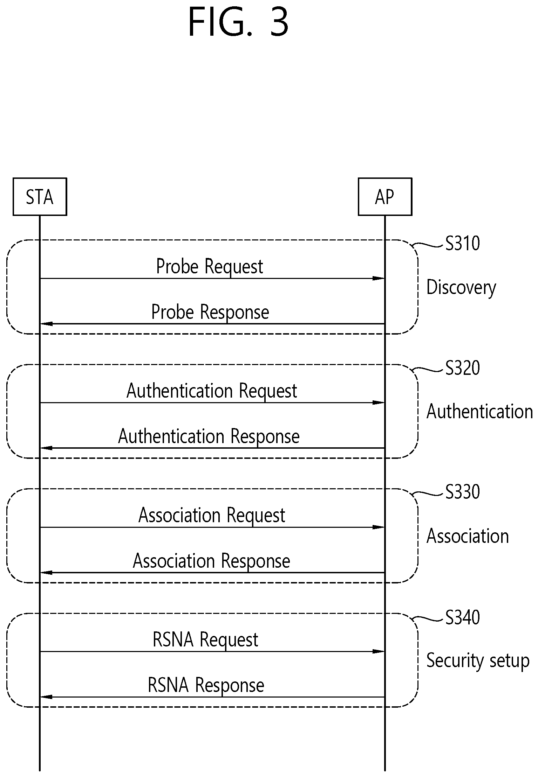

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

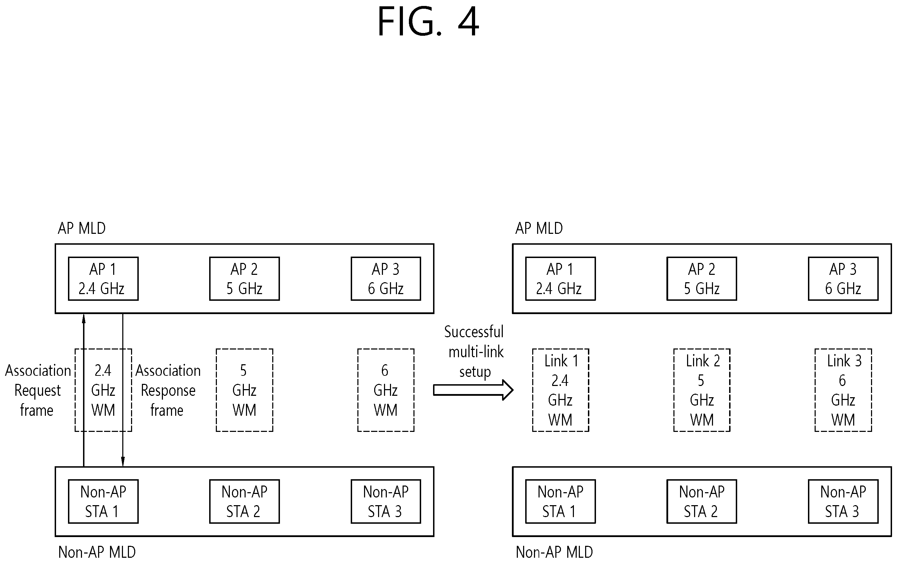

FIG. 4 illustrates an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1 and non-AP1 operate may be defined as a channel/subchannel/frequency resource within the 2.4 GHz band. In addition, in the example of FIG. 4, the second link in which AP2 and non-AP2 operate may be defined as a channel/subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4, AP1 can start a multi-link setup procedure (ML setup procedure) by transmitting an association request frame to non-AP STA1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2.

The specific features of the present disclosure are not limited to the specific features of FIG. 4. That is, the number of links can be defined in various ways, and multiple links can be defined in various ways within at least one band.

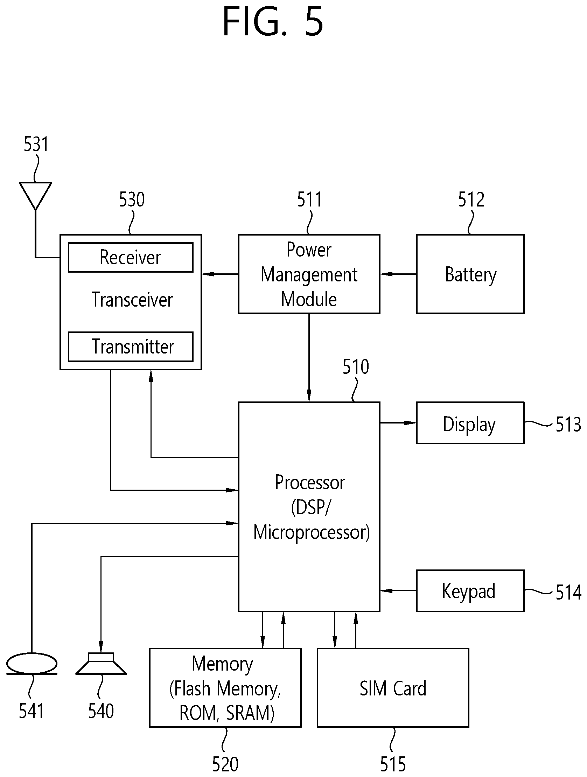

FIG. 5 illustrates a modified example of a transmitting device and/or a receiving device of the present disclosure.

The devices (e.g., AP STA, non-AP STA) shown in FIGS. 1 to 4 can be modified as shown in FIG. 5. The transceiver 530 of FIG. 5 can be identical to the transceiver 113, 123 of FIG. 1. The transceiver 530 of FIG. 5 can include a receiver and a transmitter.

The processor 510 of FIG. 5 can be identical to the processor 111, 121 of FIG. 1. Alternatively, the processor 510 of FIG. 5 can be identical to the processing chip 114, 124 of FIG. 1.

The memory 150 of FIG. 5 may be the same as the memory 112, 122 of FIG. 1. Alternatively, the memory 150 of FIG. 5 may be a separate external memory different from the memory 112, 122 of FIG. 1.

Referring to FIG. 5, the power management module 511 manages power for the processor 510 and/or the transceiver 530. The battery 512 supplies power to the power management module 511. The display 513 outputs the result processed by the processor 510. The keypad 514 receives input to be used by the processor 510. The keypad 514 may be displayed on the display 513. The SIM card 515 may be an integrated circuit used to securely store an international mobile subscriber identity (IMSI) and its associated keys, which are used to identify and authenticate subscribers in mobile devices such as mobile phones and computers.

Referring to FIG. 5, the speaker (540) may output sound-related results processed by the processor 510. The microphone (541) may receive sound-related input to be used by the processor 510.

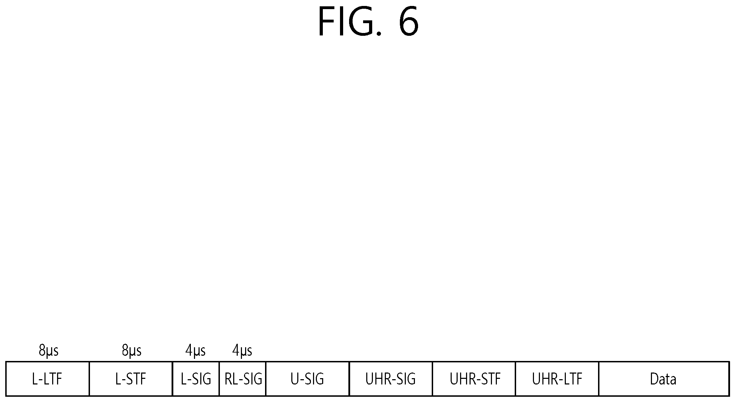

FIG. 6 illustrates an example of a physical protocol data unit or physical layer (PHY) protocol data unit (PPDU) transmitted/received by an STA of the present disclosure.

An STA (e.g., an AP STA, a non-AP STA, an AP MLD, a non-AP MLD) of the present disclosure can transmit and/or receive a PPDU of FIG. 6. The PPDU described in the present disclosure can have, for example, a structure of FIG. 6. In addition, the PPDU described in the present disclosure can be called by various names such as a transmission PPDU, a reception PPDU, a first type or an Nth type PPDU, etc. The PPDU described in the present disclosure can be used in a WLAN system defined according to IEEE 802.11bn and/or a next-generation WLAN system that improves IEEE 802.11bn.

The PPDU of FIG. 6 can be related to various PPDU types used in a UHR system. For example, the example of FIG. 6 can be used for at least one of single-user (SU) mode/type/transmission, multi-user (MU) mode/type/transmission, and null-data packet (NDP) mode/type/transmission related to channel sounding. For example, if the example of FIG. 6 is related to NDP, the data field illustrated can be omitted. If the PPDU of FIG. 6 is used for trigger-based (TB) mode, UHR-SIG of FIG. 6 can be omitted. In other words, an STA that has received a trigger frame for uplink-MU (UL-MU) communication can transmit a PPDU with UHR-SIG omitted in the example of FIG. 6.

In FIG. 6, L-STF or UHR-LTF may be called a preamble or a physical preamble, and may be generated/transmitted/received/acquired/decoded in the physical layer (included in the transmitting/receiving STA).

Each block illustrated in FIG. 6 may be called a field/subfield/signal, etc. The names of these fields/subfields/signals may be legacy short training field (L-STF), legacy long training field (L-LTF), legacy signal (L-SIG), repeated L-SIG (RL-SIG), universal signal (U-SIG), UHR-signal (UHR-SIG), etc., as illustrated in FIG. 6.

A subcarrier spacing of the L-STF, L-LTF, L-SIG, RL-SIG, U-SIG, and UHR-SIG fields of FIG. 6 may be determined as 312.5 kHz, and a subcarrier spacing of the UHR-STF, UHR-LTF, and Data fields may be determined as 78.125 kHz. That is, a tone index (or subcarrier index) of the L-STF, L-LTF, L-SIG, RL-SIG, U-SIG, and UHR -SIG fields may be expressed in unit of 312.5 kHz, and a tone index (or subcarrier index) of the UHR-STF, UHR-LTF, and Data fields may be expressed in unit of 78.125 kHz.

In the PPDU of FIG. 6, the L-LTF and the L-STF may be the same as those in the conventional fields (for example, non-HT LTF and non-HT STF defined in conventional WLAN standards).

The L-SIG field of FIG. 6 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-high throughput (HT), high throughput (HT), very high throughput (VHT) PPDU, extremely high throughput (EHT) PPDU or UHR PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI, EHT PPDU or the UHR PPDU, the value of the length field may be determined as a multiple of 3, and for the high efficiency (HE) PPDU, the value of the length field may be determined as "a multiple of 3"+1 or "a multiple of 3"+2. In other words, the LENGTH field in an UHR PPDU is set to a value satisfying the condition that the remainder is zero when LENGTH is divided by 3

For example, the (non-AP and AP) STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index{-28, -27, +27, +28}. The aforementioned signal may be used for channel estimation in the frequency domain corresponding to {-28, -27, +27, +28}.

For example, the (non-AP and AP) STA may generate an RL-SIG generated in the same manner as the L-SIG. BPSK modulation may be applied to the RL-SIG. The (non-AP and AP) STA may know that the RX PPDU is the HE PPDU, EHT PPDU, or the UHR PPDU, based on the presence of the RL-SIG. In other words, a receiving (non-AP and AP) STA can know that a received PPDU is one of a HE PPDU, an EHT PPDU, and a UHR PPDU if RL-SIG is present. In other words, a receiving (non-AP and AP) STA can know that a received PPDU is one of a non-HT PPDU, an HT PPDU, and a VHT PPDU if RL-SIG is not present. In other words, the RL-SIG field is a repeat of the L-SIG field and is used to differentiate a UHR PPDU from a non-HT PPDU, HT PPDU, and VHT PPDU.

A universal SIG (U-SIG) may be inserted after the RL-SIG of FIG. 6. The U-SIG may be called in various terms such as a first SIG field, a first SIG, a first type SIG, a control signal, a control signal field, a first (type) control signal, common control field, common control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4us. Each symbol of the U-SIG may be used to transmit the 26-bit information. For example, each symbol of the U-SIG may be transmitted/received based on 52 data tomes and 4 pilot tones.

Through the U-SIG for example, A-bit information (e.g., 52 un-coded bits) may be transmitted. A first symbol of the U-SIG may transmit first X-bit information (e.g., 26 un-coded bits) of the A-bit information, and a second symbol of the U-SIG may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, '000000'.

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits (for example, 000 value) may indicate that the TX/RX PPDU is an EHT PPDU. Also, a second value of the PHY version identifier of 3 bits (for example, 001 value) may indicate that the TX/RX PPDU is a UHR PPDU.

In other words, when the (AP/non-AP) STA transmits an EHT PPDU, the 3-bit PHY version identifier can be set to the first value, and when the (AP/non-AP) STA transmits a UHR PPDU, the 3-bit PHY version identifier can be set to the second value. In other words, the receiving (AP/non-AP) STA can determine that the received PPDU is an EHT PPDU based on the PHY version identifier having the first value, and can determine that the received PPDU is a UHR PPDU based on the PHY version identifier having the second value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a transmission opportunity (TXOP) length and information related to a BSS color ID.

For example, if a UHR PPDU is classified into various types (e.g., type related to SU transmission (performed based on UL or DL), type related to DL transmission, type related to NDP transmission, type related to DL non-MU-MIMO, type related to DL MU-MIMO, type related to multi-AP operation, type related to coordinated beamforming (CBF), spatial reuse (SR), type related to coordinated OFDMA (C-OFDMA), type related to coordinated TDMA (CTDMA)), information about the type of the UHR PPDU (e.g., 2-bit or 3-bit information) can be included in the version-dependent bits of the U-SIG.

For example, the U-SIG may include: 1) a bandwidth field including information related to a bandwidth; 2) a field including information related to modulation and coding scheme (MCS) applied to UHR-SIG; 3) an indication field including information regarding whether a dual subcarrier modulation (DCM) scheme is applied to UHR-SIG; 4) a field including information related to the number of symbol used for UHR-SIG; 5) a field including information regarding whether the UHR-SIG is generated across a full band; 6) a field including information related to a type of UHR-LTF/STF; and 7) information related to a field indicating an UHR-LTF length and a CP length.

Preamble puncturing may be applied to the PPDU of FIG. 6. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or UHR-SIG. For example, a first field of the U-SIG may include information related to a contiguous bandwidth, and second field of the U-SIG may include information related to the preamble puncturing applied to the PPDU.

For example, the U-SIG and the UHR-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an UHR-SIG contiguous to the first U-SIG may include information related to a preamble puncturing applied to the second 80 MHz band (i.e., information related to a preamble puncturing pattern), and an UHR-SIG contiguous to the second U-SIG may include information related to a preamble puncturing (i.e., information related to a preamble puncturing pattern) applied to the first 80 MHz band.

Additionally or alternatively, the U-SIG and the UHR-SIG may include the information related to the preamble puncturing, based on the following method. The U-SIG may include information related to a preamble puncturing (i.e., information related to a preamble puncturing pattern) for all bands. That is, the UHR-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The UHR-SIG of FIG. 6 may include control information for the receiving STA. The UHR-SIG may be transmitted through at least one symbol, and one symbol may have a length of 4us. Information related to the number of symbols used for the UHR-SIG may be included in the U-SIG.

UHR-SIG provides an additional signal to the U-SIG field to enable STA to interpret/decode UHR PPDU. UHR-SIG field may include U-SIG overflow bits that are commonly applied to all users. In addition, UHR-SIG field includes resource allocation information, so that STA can look-up resources used in fields including data field/UHR-STF/UHR-LTF (i.e., UHR modulated fields of a UHR PPDU).

Frequency resources of UHR-LTF, UHR-STF, and data fields illustrated in FIG. 6 may be determined based on RUs (resource units) defined by multiple subcarriers/tones. That is, UHR-LTF, UHR-STF, and data fields of the present disclosure may be transmitted/received through RUs (resource units) defined by multiple subcarriers/tones.

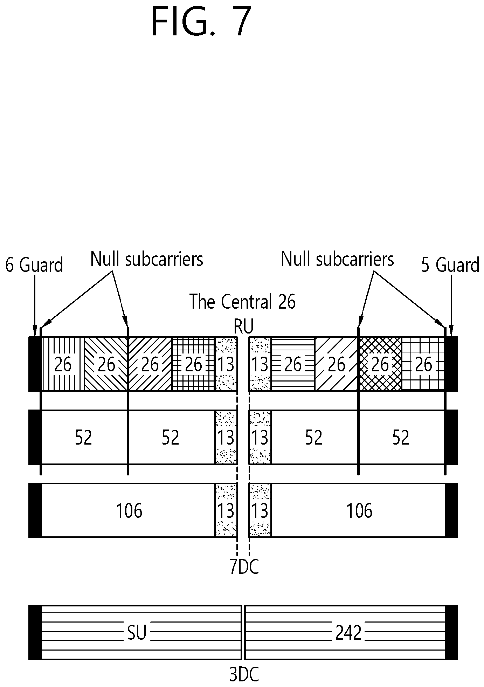

FIG. 7 illustrates the layout of resource units (RUs) used for a 20 MHz PPDU. That is, the UHR-LTF, UHR-STF, and/or data fields included in the 20 MHz PPDU can be transmitted/received through at least one of the various RUs defined in FIG. 7.

As illustrated in the uppermost part of FIG. 7, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

The layout of the RUs in FIG. 7 may be used not only for a multiple users (MUs) but also for a single user (SU), in which case one 242-unit may be used and three DC tones may be inserted as illustrated in the lowermost part of FIG. 7.

Although FIG. 7 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones). In the present disclosure, N-RU may be represented as N-tone RU, etc. For example, 26-RU may be represented as 26-tone RU.

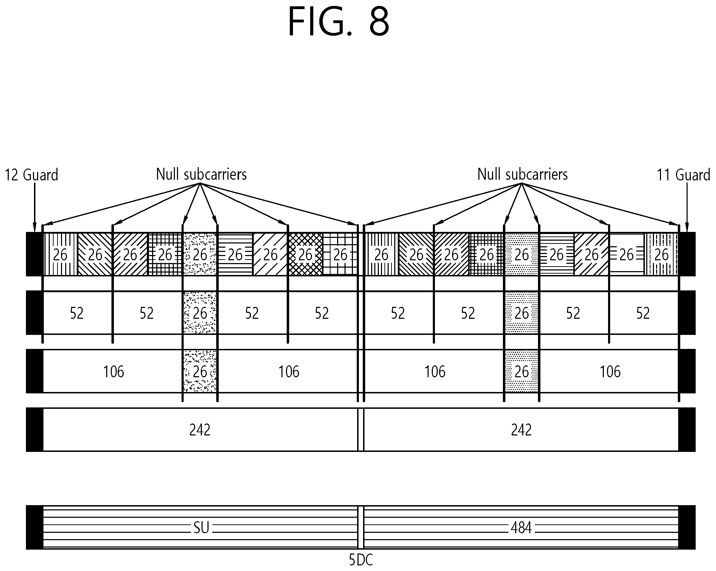

FIG. 8 illustrates the layout of resource units (RUs) used for 40MHz PPDU.

Similarly to FIG. 7 in which RUs having various sizes are used, a 26-RU, a 52-RU, a 106-RU, a 242-RU, a 484-RU, and the like may be used in an example of FIG. 8. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 8, when the layout of the RUs is used for a single user, a 484-RU may be used. The specific number of RUs may be changed similarly to FIG. 7.

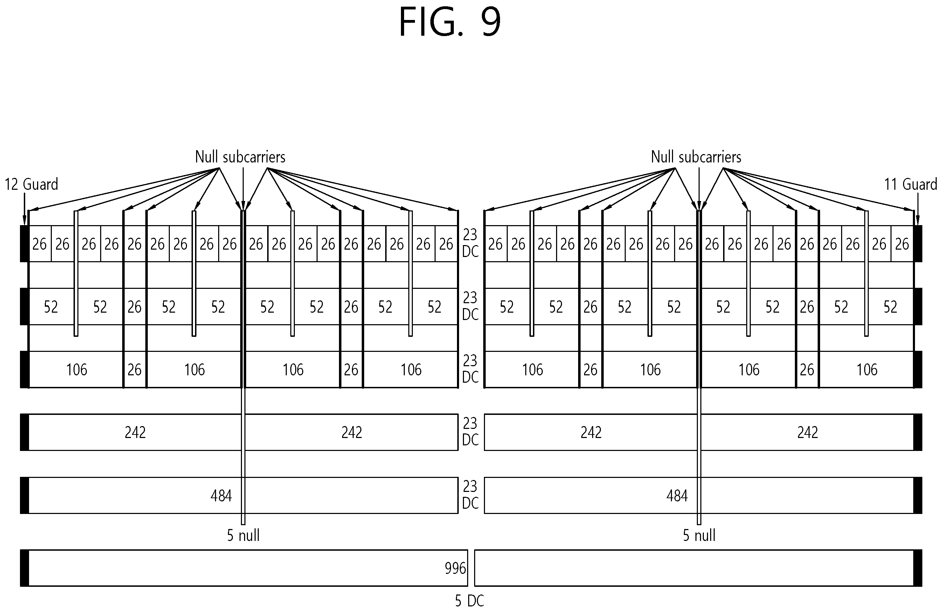

FIG. 9 illustrates the layout of resource units (RUs) used for an 80MHz PPDU. The layout of the resource units (RUs) used in the present disclosure may vary. For example, the layout of the resource units (RUs) used in the 80MHz band may vary.

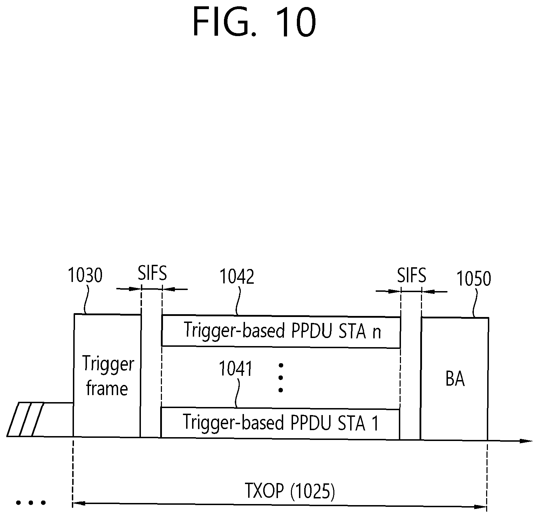

FIG. 10 illustrates an operation related to UL-MU. As shown, a transmitting STA (e.g., AP) can obtain TXOP 1025 by performing channel access through contending (i.e., backoff operation) and transmit trigger frame 1030. That is, the transmitting STA (e.g., AP) can transmit PPDU including trigger frame 1030. When PPDU including trigger frame is received, trigger-based (TB) PPDU is transmitted after delay of SIFS.

TB PPDU 1041, 1042 can be transmitted at the same time and transmitted from multiple STA (e.g., user STA) whose AID is indicated in trigger frame 1030. ACK frame 1050 for TB PPDU can be implemented in various forms. For example, ACK frame 1050 for TB PPDU can be implemented in the form of block ACK (BA).

In FIG. 10, transmission(s) of trigger Frame 1030, TB PPDU 1041, 1042 and/or ACK Frame 1050 can be performed within TXOP 1025.

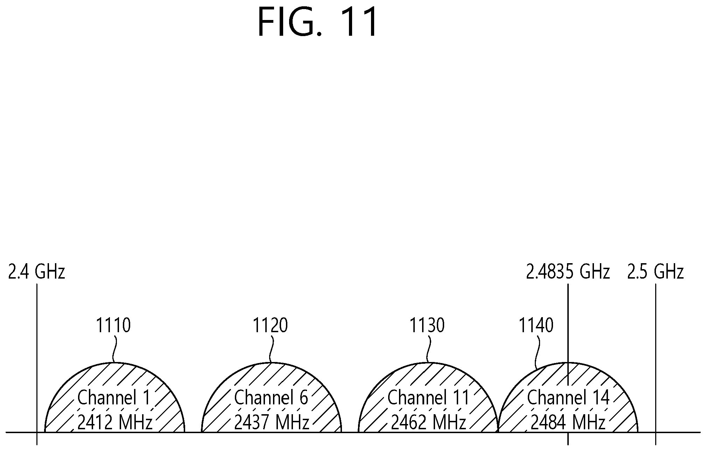

FIG. 11 illustrates an example of channels used/supported/defined within the 2.4 GHz band.

The 2.4 GHz band may also be referred to by other names, such as "first band." Furthermore, the 2.4 GHz band may refer to a frequency range in which channels with a center frequency adjacent to 2.4 GHz (e.g., channels with a center frequency between 2.4 and 2.5 GHz) are used/supported/defined.

The 2.4 GHz band may include multiple 20 MHz channels. Each 20 MHz within the 2.4 GHz band may have multiple channel indices (e.g., indices 1 through 14). For example, the center frequency of a 20 MHz channel assigned with channel index 1 may be 2.412 GHz, the center frequency of a 20 MHz channel assigned with channel index 2 may be 2.417 GHz, and the center frequency of a 20 MHz channel assigned with channel index N may be (2.407 + 0.005*N) GHz. Channel indices may be referred to by various names, such as channel numbers. The specific numerical values of the channel indices and center frequencies may vary.

FIG. 11 illustrates examples of four channels within the 2.4 GHz band. The illustrated first frequency region 1110 to fourth frequency regions 1140 may each include one channel. For example, the first frequency region 1110 may include channel 1 (a 20 MHz channel with index 1). In this case, the center frequency of channel 1 may be set to 2412 MHz. The second frequency range 1120 may include channel 6. The center frequency of channel 6 may be set to 2437 MHz. The third frequency range 1130 may include channel 11. The center frequency of channel 11 may be set to 2462 MHz. The fourth frequency range 1140 may include channel 14. The center frequency of channel 14 may be set to 2484 MHz.

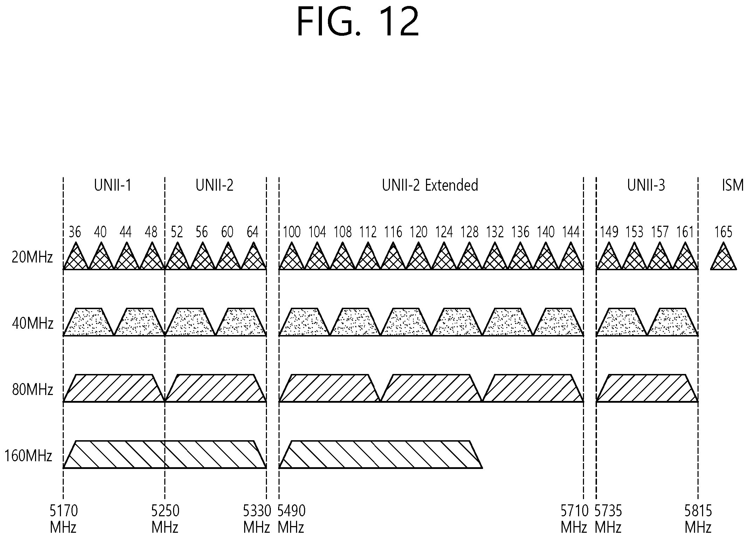

FIG. 12 illustrates an example of channels used/supported/defined within the 5 GHz band.

The 5 GHz band may be referred to by other names, such as "second band" or "band." The 5 GHz band may refer to a frequency range in which channels with a center frequency of 5 GHz or more but less than 6 GHz (or less than 5.9 GHz) are used/supported/defined. Alternatively, the 5 GHz band may include multiple channels between 4.5 GHz and 5.5 GHz. The specific numerical values shown in FIG. 12 may vary.

The multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2Extended. UNII-3 may be referred to as UNII-Upper.

Multiple channels may be configured within the 5 GHz band, and the bandwidth of each channel may vary, such as 20 MHz, 40 MHz, 80 MHz, or 160 MHz. For example, the 5170 MHz to 5330 MHz frequency range within UNII-1 and UNII-2 may be divided into eight 20 MHz channels. The 5170 MHz to 5330 MHz frequency range can be divided into four channels across a 40 MHz frequency band. The 5170 MHz to 5330 MHz frequency range can be divided into two channels across an 80 MHz frequency band. Alternatively, the 5170 MHz to 5330 MHz frequency range can be divided into one channel across a 160 MHz frequency band.

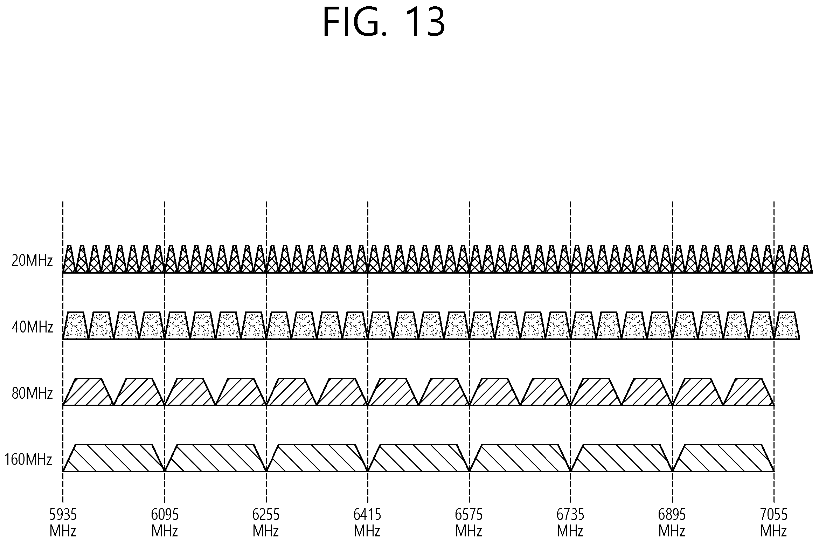

FIG. 13 illustrates an example of channels used, supported, and defined within the 6 GHz band.

The 6 GHz band may also be referred to by other names, such as the third band. The 6 GHz band may refer to a frequency range in which channels with center frequencies above 5.9 GHz are used, supported, and defined. The specific numbers shown in FIG. 13 may vary.

For example, the 20 MHz channel in FIG. 13 may be defined starting from 5.940 GHz. Specifically, the leftmost channel among the 20 MHz channels in FIG. 13 may have an index of 1 (or channel index, channel number, etc.), and a center frequency of 5.945 GHz may be assigned. That is, the center frequency of the index N channel may be determined as (5.940 + 0.005*N) GHz.

Accordingly, the indexes (or channel numbers) of the 20 MHz channels of FIG. 13 are 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, It can be 197, 201, 205, 209, 213, 217, 221, 225, 229, 233. Also, according to the (5.940 + 0.005*N) GHz rule mentioned above, the indices of the 40 MHz channels in FIG. 13 can be 3, 11, 19, 27, 35, 43, 51, 59, 67, 75, 83, 91, 99, 107, 115, 123, 131, 139, 147, 155, 163, 171, 179, 187, 195, 203, 211, 219, 227.

The MAC frames included in the data field of the PPDU of the present disclosure can be classified into various types. For example, the MAC frames of the present disclosure can be classified into control frames, management frames, and data frames.

For example, the management frame includes Association Request, Association Response, Reassociation Request, Reassociation Response, Probe Request, Probe Response, Beacon, Disassociation, Authentication, and Deauthentication frames/signals defined in conventional WLANs. For the management frame, the value of the type field (B3 and B2) of the MAC header is set to 00. Additionally, the values of the subtype fields (B7, B6, B5, B4) of the MAC header are as follows: Association Request (0000), Association Response (0001), Reassociation Request (0010), Reassociation Response (0011), Probe Request (0100), Probe Response (0101), Beacon (1000), Disassociation (1010), Authentication (1011), Deauthentication (1100).

For example, the control frame includes the Trigger Beamforming Report Poll, NDP Announcement (NDPA), Control Frame Extension, Control Wrapper, Block Ack Request (BlockAckReq), Block Ack (BlockAck), PS-Poll, RTS, CTS, Ack, and CF-End frames/signals defined in conventional WLANs. For the control frame, the values of the type fields (B3 and B2) of the MAC header are set to 01. Additionally, the values of the subtype fields (B7, B6, B5, B4) of the MAC header are as follows: Trigger

(0010), Beamforming Report Poll (0100), NDP Announcement (0101), Control Frame Extension (0110), Control Wrapper (0111), BlockAckReq (1000), BlockAck (1001), PS-Poll (1010), RTS (1011), CTS (1100), Ack (1101), CF-End (1110).

For example, the data frame includes (QoS) Data, (QoS) Null, etc., as defined in conventional WLANs. For this data frame, the values of the type fields (B3 and B2) of the MAC header are set to 10.

The type of the MAC frame used in the present disclosure may be identified through the type field/information and the subtype field/information included in the frame control field of the header of the MAC frame (i.e., the MAC header). For example, the "trigger frame" of the present disclosure may mean a MAC frame in which the type bits B3 and B2 in the frame control field of the MAC header are set to 01, and the subtype bits B7, B6, B5, and B4 in the frame control field are also set to 0010. Various MAC frames described in the present disclosure are inserted/included in the data field of various PPDUs (e.g., HE/VHT/HE/EHT/UHR PPDUs).

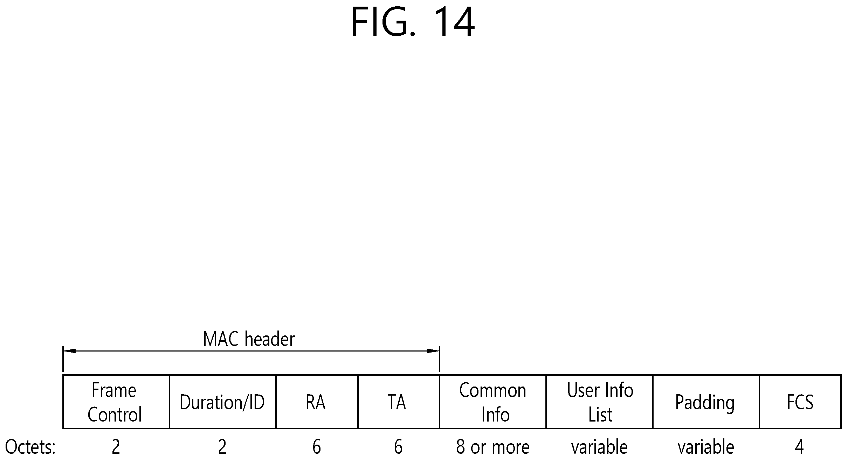

FIG. 14 illustrates a trigger frame format. The trigger frame format may also be referred to as the structure of a trigger frame.

Referring to FIG. 14, a trigger frame may include a frame control field, a duration/ID field, a receiver address (RA) field, a transmitter address (TA) field, a Common Info field, a User Info list field, a padding field, and/or a frame check sequence (FCS) field. Optionally, the trigger frame may further comprise a special User Info field between the Common Info field and the User Info list field. The User Info list field may include one or more User Info fields. The frame control field, duration/ID field, RA field, and TA field may constitute a MAC header.

For example, the common information field may comprise a trigger type subfield. The value of the trigger type subfield may indicate a variant of the trigger frame as shown in <Table 1>:

**[Table 1]**

| **Trigger type subfield value** | **Trigger frame variant** |
|---|---|
| 0 | Basic |
| 1 | Beamforming Report Poll (BFRP) |
| 2 | MU-BAR |
| 3 | MU-RTS |
| 4 | Buffer Status Report Poll (BSRP) |
| 5 | GCR MU-BAR |
| 6 | Bandwidth Query Report Poll (BQRP) |
| 7 | NDP Feedback Report Poll (NFRP) |
| 8 | Ranging |
| 9-15 | Reserved |

For example, when the value of the Trigger Type subfield is set to 0, the corresponding trigger frame may be a basic trigger frame. For example, when the value of the Trigger Type subfield is set to 2, the corresponding trigger frame may be a multi-user (MU)-block acknowledge request (BAR) trigger frame. For example, when the value of the Trigger Type subfield is set to 4, the corresponding trigger frame may be a BSRP trigger frame. The MU-BAR trigger frame and/or the BAR trigger frame may include a BAR Type subfield. The (MU-)BAR (trigger) frame variant according to the BAR Type (or the value of the BAR Type subfield) is as shown in <Table 2> below:

**[Table 2]**

| **BAR Type** | **(MU-)BAR (Trigger) Frame variant** |
|---|---|
| 0 | Reserved |
| 1 | Extended Compressed |
| 2 | Compressed |
| 3 | Multi-TID |
| 4-5 | Reserved |
| 6 | GCR |
| 7-9 | Reserved |
| 10 | GLK-GCR |
| 11-15 | Reserved |

A block acknowledge (BA) frame may be used as a response frame for the MU-BAR trigger frame. The BA frame may include a BA Control field, and the BA Control field may include a BA Type subfield. The BA frame variant according to the BA Type (or the value of the BA Type subfield) is as shown in <Table 3> below:

**[Table 3]**

| **BA Type** | **BA Frame variant** |
|---|---|
| 0 | Reserved |
| 1 | Extended Compressed |
| 2 | Compressed |
| 3 | Multi-TID |
| 4-5 | Reserved |
| 6 | EDMG Multi-TID |
| 7 | Reserved |
| 8 | EDMG Compressed |
| 9 | Reserved |
| 10 | GLK-GCR |
| 11 | Multi-STA |
| 12-15 | Reserved |

Meanwhile, STAs having data available for transmission may perform clear channel assessment (CCA) for sensing a medium during a specific period (for example, distributed coordination function (DCF) inter-frame space (DIFS)) before transmitting data. At this time, if the medium is idle, the STA can perform transmission using the medium. However, if the medium is busy, it can be assumed that several STAs are already waiting to use the medium, and the STA can transmit data after waiting for a random backoff duration in addition to the DIFS. At this time, the random backoff duration allows collision avoidance, because when it is assumed that there are several STAs for transmitting data, each STA probabilistically has a different backoff duration value and eventually has a different transmission time. Once one STA starts transmission, other STAs cannot use the medium. In a random backoff procedure, if a specific medium changes from a busy state to an idle state, several STAs start preparation for sending data. At this time, in order to minimize collisions, STAs intending to transmit data respectively select a random backoff count, and wait for a slot time corresponding to the selected counter. The random backoff count is a pseudo-random integer value and one of values uniformly distributed in a range of [0 CW] is selected. CW means a contention window. The CW parameter takes a CWmin value as an initial value, but if transmission fails, the value is increased by two times. For example, if an ACK response for a transmitted data frame has not been received, it can be considered that a collision has occurred. If the CW value reaches a CWmax value, the CWmax value is maintained until data transmission succeeds, and if data transmission succeeds, the CW value is reset to the CWmin value. At this time, CW, CWmin, and CWmax may be expressed as 2^n-1 for convenience of implementation and operation. Meanwhile, when a random backoff procedure starts, a STA selects a random backoff count within a range of [0 CW], and then continues to monitor the medium while a backoff slot is counted down. If the medium becomes busy in the meantime, it stops the countdown and then resumes the countdown of the remaining backoff slots when the medium becomes idle again.

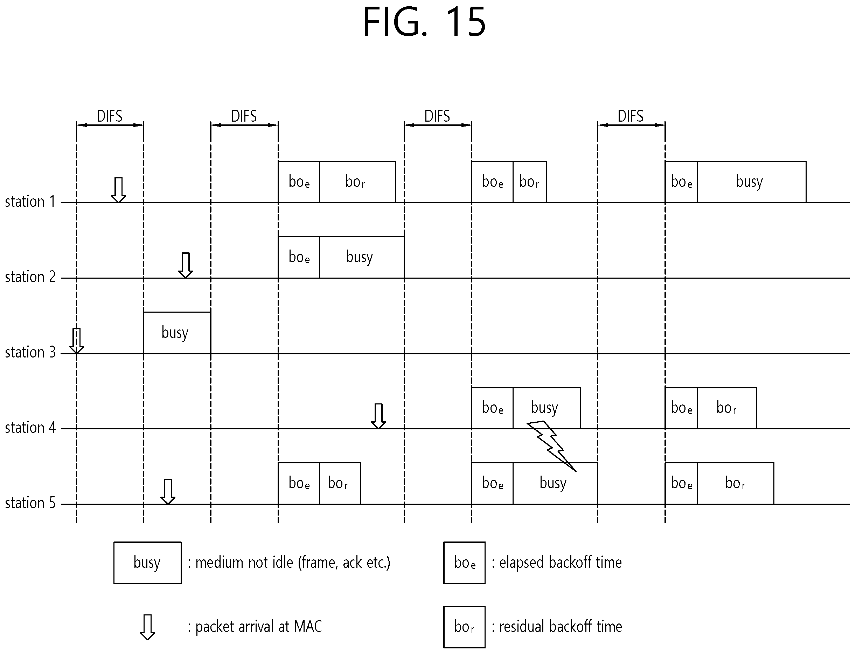

FIG. 15 shows an example of a random backoff procedure.

Referring to FIG. 15, when several STAs have data they intend to send, in the case of STA3, a data frame can be immediately transmitted because the medium is idle for as long as DIFS, and the remaining STAs wait for the medium to become idle. Since the medium has been idle for a while, several STAs would monitor an opportunity to use the medium. Therefore, each STA selects a random backoff count, and at this time, STA 2, which has selected the smallest backoff count, can transmit a data frame. After the transmission of STA2 ends, the medium becomes idle again and STAs resume the countdown for the backoff duration that was previously stopped. STA 5, which had the next smallest random backoff count value and stopped the countdown for a moment when the medium was busy, starts transmission of a data frame after counting down the remaining backoff slots, but a collision may occur as it happens to overlap with a random backoff count value of STA 4. At this time, since both STAs do not receive an ACK response after data transmission, both STAs select a random backoff count value again after increasing CW by two times.

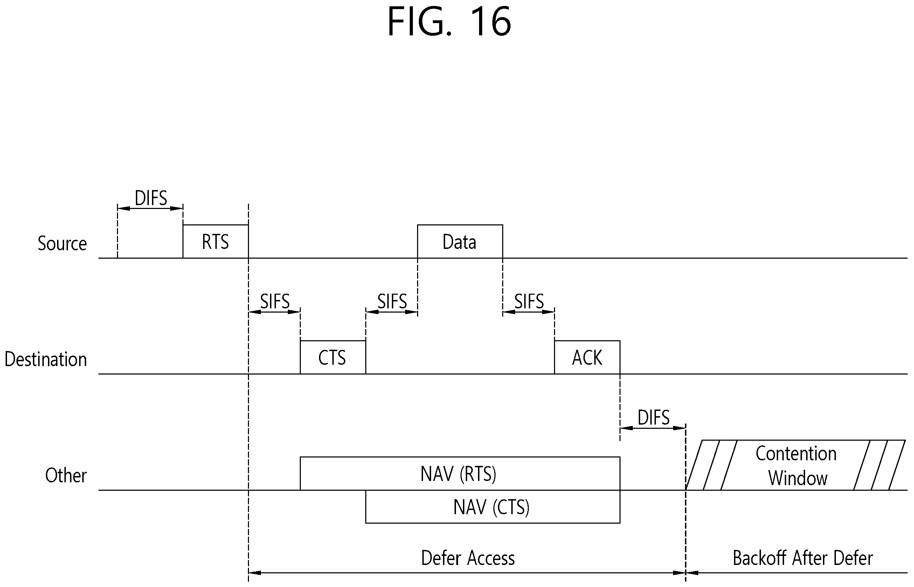

FIG. 16 illustrates an example of a procedure related to NAV setting.

Referring to FIG. 16, when a Source (e.g., an AP STA/non-AP STA) intending to transmit data transmits a request-to-send (RTS) frame to a Destination (e.g., an AP STA/non-AP STA) receiving the data, the Destination can transmit a clear-to-send (CTS) frame to neighboring stations to notify them that it will receive the data. In other words, the Destination designated as the receiver through the RTS frame can transmit a CTS frame. If the Source that transmitted the RTS frame receives the CTS frame, the Source can initiate data transmission to the Destination.

Meanwhile, if a STA other than the Destination designated as the receiver through the RTS frame receives the RTS frame, or if a STA other than the Source that transmitted the RTS frame receives the CTS frame, the STA can configure a network allocation vector (NAV). A STA that has set a NAV may not transmit data during the NAV period, which allows the STA to avoid collisions between the STA and the Source/Destination. On the other hand, if the Destination designated as the receiver through the RTS frame receives the RTS frame, or if the Source that transmitted the RTS frame receives a CTS frame, the Source/Destination does not set a NAV.

If a CTS frame (e.g., PHY-RXSTART.indication primitive) is not received within a certain period from the time the RTS frame is received (e.g., the time when the MAC receives the PHY-RXEND.indication primitive corresponding to the RTS frame), STAs that have set or updated a NAV through the RTS frame may reset the NAV (e.g., to 0). The certain period may be (2*aSIFSTime + CTS_Time + aRxPHYStartDelay + 2*aSlotTime). The CTS_Time can be calculated based on the length and data rate of the CTS frame indicated by the RTS frame.

For convenience of description, FIG. 16 illustrates setting or updating the NAV through the RTS frame or the CTS frame. However, NAV setting/resetting/updating can also be performed based on the duration field of various other frames, such as non-HT PPDU, HT PPDU, VHT PPDU, or HE PPDU (e.g., the duration field in the MAC header of a MAC frame). For example, if the RA field in a received MAC frame does not match its own address (e.g., MAC address), The STA may set, reset, or update the NAV based on the value of the Duration field in the received MAC frame.

A non-AP STA shall maintain two NAVs, and an AP may maintain two NAVs: an intra-BSS NAV and a basic NAV. The intra-BSS NAV may be updated/set by an intra-BSS PPDU. The basic NAV may be updated /set by an inter-BSS PPDU or a PPDU that cannot be classified as intra-BSS or inter-BSS.

Hereinafter, contents regarding power management modes are described.

A non-AP STA can be in one of two power management modes:
- Active mode: The STA receives and transmits frames at any time if the STA is in awake state. A non-HE STA remains in the awake state. An HE STA remains in the awake state, unless the STA is unavailable. A STA that is unavailable is not capable of receiving PPDUs; and
- Power save (PS) mode: The STA enters the awake state to receive or transmit frames. The STA remains in the doze state otherwise.

A STA in PS mode can be in one of two power states:
- Awake state: STA is fully powered; and
- Doze state: STA is not able to transmit or receive non-WUR PPDUs and consumes very low power.

The manner in which a STA transitions between power states is determined by its power management mode and reflected in dot11PowerManagementMode.

The power management mode of a STA is selected by the PowerManagementMode parameter of the MLMEPOWERMGT.request primitive or MLME-MESHPOWERMGT.request primitive. Once the STA updates its power management mode, the MLME shall issue an MLME-POWERMGT.confirm primitive or MLMEMESHPOWERMGT.confirm primitive respectively indicating the success of the operation.

A STA that is associated with an AP and that changes power management mode shall inform the AP of this fact using the Power Management subfield within the Frame Control field of transmitted frames. The STA shall remain in its current power management mode until it informs the AP of a power management mode change via a frame exchange sequence that includes an acknowledgment from the AP. Power management mode shall not change during any single frame exchange sequence. This means the Power Management subfield is the same for all MPDUs in an A-MPDU.

A STA operating in PS mode with dot11NonTIMModeActivated equal to false that is not in WNM sleep mode shall periodically listen for Beacon frames, as determined by the ListenInterval parameter of the MLMEASSOCIATE.request or MLME-REASSOCIATE.request primitive and the ReceiveDTIMs parameter of the MLME-POWERMGT.request primitive. STAs operating in PS modes with dot11NonTIMModeActivated equal to true transmit at least one PS-Poll or trigger frame that is individually addressed to the associated AP every ListenInterval parameter used by the MLME primitives starting from the last known transition of the S1G STA in non-TIM mode in doze state unless it follows the TWT or NDP Paging procedure.

WNM sleep mode enables an extended power save mode for non-AP STAs in which a non-AP STA need not listen for every DTIM beacon, and need not perform GTK/IGTK/BIGTK updates. STAs in WNM sleep mode can wake up as infrequently as once every WNM sleep interval to check whether the corresponding TIM bit is set or group addressed traffic is pending. A STA may use both WNM sleep mode and PS mode simultaneously. The Power Management subfield of the Frame Control field may be set to 0 or 1 within a frame sent by a STA in WNM sleep mode.

### I. non-AP STA power management modes

A non-AP STA shall be in active mode upon (re)association, except that if the (re)association is performed using the on-channel tunneling procedure, then the non-AP STA shall be considered to be in power save mode and in doze state upon (re)association on the BSS identified by the BSSID, Band ID, and Channel Number fields contained in the Multi-band element transmitted in the On-channel Tunnel Request frame that carries the (Re)Association Request frame.

A STA that has transmitted a frame to an AP with which it is not associated and from which it expects a response shall remain in the awake state until such a response is received or until the procedure has timed out.

To change power management modes a STA shall inform the AP by completing a successful frame exchange that is initiated by the STA. This frame exchange sequence shall include a Management frame, Extension frame or Data frame from the STA, and an Ack or a BlockAck frame from the AP. The Power Management subfield(s) in the Frame Control field of the frame(s) sent by the STA in this exchange indicates the power management mode that the STA shall adopt upon successful completion of the frame exchange sequence, except where the Power Management subfield is reserved. A non-AP STA shall not change power management mode using a frame exchange sequence that does not receive an Ack or BlockAck frame from the AP, or using a BlockAckReq frame. The Power Management subfield is ignored in frame exchange sequences initiated by the AP.

A non-S1G STA that is changing from doze to awake state in order to transmit shall perform CCA until a frame is detected by which it can set its NAV, or until a period of time indicated by the NAVSyncDelay from the MLME-JOIN.request primitive has transpired. An S1G STA that is changing from doze to awake state in order to transmit shall perform CCA until a frame is detected by which it can set its RID or NAV, or until a period of time indicated by the NAVSyncDelay from the MLME-JOIN.request primitive has transpired.

To change power management mode, a STA that is coordinated by an MM-SME shall inform the AP through a successful frame exchange sequence initiated by the STA. The Power Management subfield in the Frame Control field of the frame sent by the STA in this exchange indicates the power management mode that the STAs coordinated by the MM-SME and advertised in the MMS element sent by the STA shall adopt upon successful completion of the frame exchange sequence. To change the power management mode of the coordinated STA, the frame may be sent using any of the MMSLs within the MMSL cluster established with the AP.

A non-AP S1G STA requests the type of PS mode (TIM mode or non-TIM mode) through the (Re)Association Request frame transmitted to the S1G AP.

A non-AP S1G STA requests operation in non-TIM mode by setting the Non-TIM Support field in the S1G Capabilities element in the (Re)Association Request frame to 1.

A non-AP S1G STA requests operation in TIM mode by setting the Non-TIM Support field in the S1G Capabilities element in the (Re)Association Request frame to 0.

A non-AP S1G STA determines the type of PS mode (TIM mode or non-TIM mode) from the (Re)Association Response frame received from the S1G AP.

If an S1G AP sets the Non-TIM Support field in the S1G Capabilities element in the (Re)Association Response frame to 1, then the non-AP S1G STA shall set dot11NonTIMModeActivated to true and operate in non-TIM mode following association, and is referred to as a non-TIM STA.

If an S1G AP sets the Non-TIM Support field in the S1G Capabilities element in the (Re)Association Response frame to 0, then the non-AP S1G STA shall set dot11NonTIMModeActivated to false and operate in TIM mode following association, and is referred to as a TIM STA.

A non-AP S1G STA shall operate in the negotiated PS mode during association unless a PS mode switch is negotiated or a temporary PS mode switch has occurred. The STA shall update the value of the ListenInterval parameter it uses in invocations of primitives with the AID Response Interval field in the AID Response element of the (Re)Association Response frame.

An S1G STA in TIM mode listens to selected Beacon frames (based upon the ListenInterval parameter of the MLME-ASSOCIATE.request or MLME-REASSOCIATE.request primitive) and sends PS-Poll frames to the AP if the TIM element in the most recent Beacon frame indicates an individually addressed BU is buffered for that STA.

An S1G STA in non-TIM mode shall transmit at least one PS-Poll or trigger frame that is individually addressed to the associated AP every listen interval and might not listen to selected S1G Beacon frames (based upon the ListenInterval parameter of the MLME-ASSOCIATE.request or MLME-REASSOCIATE.request primitive) unless it follows the TWT or NDP Paging procedure. An S1G STA in non-TIM mode may send (NDP) PS-Poll frames to an S1G AP regardless of whether individually addressed buffered BUs have been indicated by the S1G AP.

### II. AP power management

An AP with dot11APPMActivated equal to false or not present shall operate in the Active mode. An AP with dot11APPMActivated equal to true may operate in the following Power Management modes:
- Active mode; and
- Power save mode.

An AP in active mode shall be in awake state and may receive frames at any time.

An AP with dot11APPMActivated equal to true in Power Save mode may be in any of the following two power states:
- Awake state; and
- Doze state.

The AP with dot11APPMActivated equal to true may indicate that it is operating in Power Save mode by either:
- Setting the AP PM bit in the Frame Control field of the S1G Beacon frame to 1; or
- Including one or more RPS elements in the S1G Beacon frame that indicate AP PM RAWs (i.e., with the RAW Assignment Type equal to Simplex RAW and RAW Type Options equal to 0).

The AP shall operate in active mode during a beacon interval or short beacon interval if the AP PM subfield in the S1G Beacon frame transmitted at the TBTT or TSBTT is equal to 0. Similarly, the AP shall operate in active mode during one or more RAWs defined by an RPS element with the RAW Assignment type equal to generic RAW, sounding RAW, triggering frame RAW or simplex RAW with RAW Type Options equal to 1 or 2.

An AP that transmits an S1G Beacon frame with AP PM subfield equal to 1 may be in doze state at any time until the next TBTT or TSBTT, except that it shall be in awake state during any of the following intervals of time:
- Any RAW or PRAW intervals that are set up, except for RAWs that are defined by any RPS element with RAW Assignment Type equal to simplex RAW and RAW Type Options equal to 0; and
- Any TWT SPs that are negotiated according to Target wake time (TWT).

An AP shall not be in doze state for a duration of time that exceeds the value of the dot11MaxAwayDuration. The AP shall set dot11MaxAwayDuration to the lowest value obtained from the Max Away Duration field that is contained in the most recently received MAD elements from any of its associated STAs.

Irrespective of the Power Management mode and Power States, an AP shall maintain the synchronization of the network by generating beacons.

A STA that is the intended receiver of a frame transmitted by an AP that has the PM Mode subfield equal to 0 shall consider the AP in active mode.

An AP that has previously sent a frame to one or a group of STAs with PM bit equal to 0, shall send a frame with PM bit equal to 1 to the same set of STAs before changing its operation mode to Power Save mode.

A STA that is the intended receiver of a frame transmitted by an AP that has the PM Mode subfield equal to 1 shall consider the AP in Power Save mode.

Hereinafter, contents regarding multi-link (ML) power management are described.

Each non-AP STA affiliated with a non-AP MLD that is operating on an enabled link shall maintain its own power management mode and power states. Frame exchanges on an enabled link are possible when the non-AP STA affiliated with the non-AP MLD operating on that link is in the awake state.

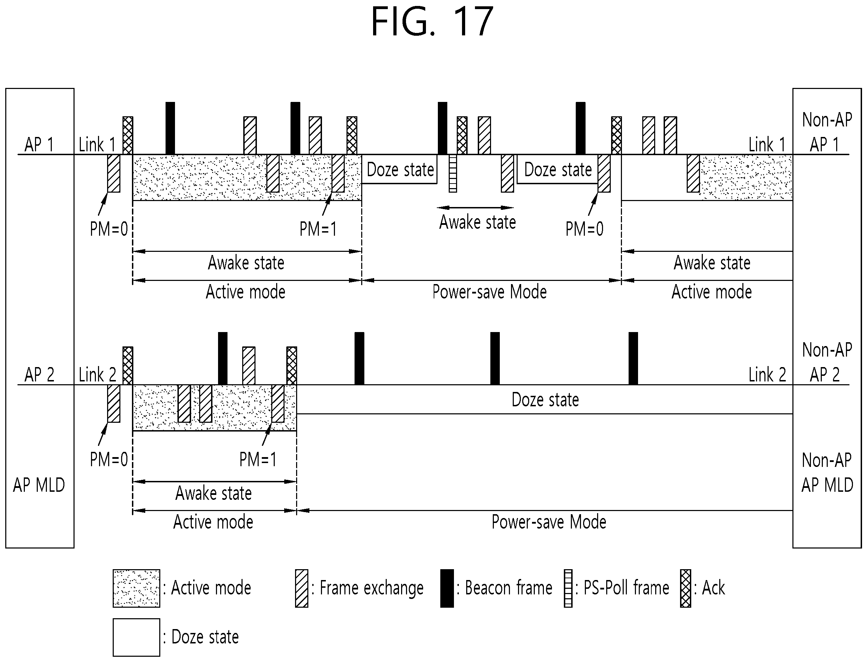

FIG. 17 shows an example of per-link power save operation.

Referring to FIG. 17 power save operation for each non-AP STA affiliated with a non-AP MLD during MLO is illustrated. It is assumed that all TIDs are mapped to all or a subset of links. As depicted in FIG. 17, during the initial portion of the illustration, both non-AP STAs affiliated with the non-AP MLD are in active mode and are involved in frame exchange with the respective APs on the links. Each non-AP STA affiliated with the non-AP MLD indicates that it is in active mode by setting to 0 the Power Management subfield (namely PM bit in FIG. 17) in the Frame Control field of a transmitted frame. At some point in time, non-AP STA 2 affiliated with the non-AP MLD operating on Link 2 indicates to AP 2 that it is entering power save mode (i.e., sets PM bit to 1) and transitions to the doze state after the successful frame exchange. Non-AP STA 2 remains in the doze state for the rest of the illustration. After a period of time, non-AP STA 1 enters power save mode (i.e., sets PM bit to 1) after the successful frame exchange. While operating in power save mode, non-AP STA 1 wakes up to receive the Beacon frame transmitted by AP 1 and determines that AP MLD has BUs for the non-AP MLD. Based on this determination, non-AP STA 1 indicates to AP 1 that it has transitioned to the awake state by transmitting a PS-Poll or U-APSD trigger frame on Link 1. Non-AP STA 1 participates in frame exchange with AP 1 while in the awake state.

Hereinafter, contents regarding enhanced multi-link single radio (EMLSR) operation are described.

The EMLSR operation allows a non-AP MLD with multiple receive chains to listen on one or more EMLSR links when the corresponding non-AP STAs affiliated with the non-AP MLD are in the awake state for an initial Control frame sent by an AP affiliated with an AP MLD in a non-HT (duplicate) PPDU and then participate in frame exchanges on the link on which the initial Control frame was received.

A non-AP MLD may operate in the EMLSR mode on a specified set of the enabled links between the non-AP MLD and its associated AP MLD. The specified set of the enabled links on which the EMLSR mode is applied is called EMLSR links. The EMLSR links shall be indicated in the EMLSR Link Bitmap subfield of the EML Control field of the EML Operating Mode Notification frame by setting the bit positions corresponding to the link ID value(s) of the EMLSR link(s) in the EMLSR Link Bitmap subfield to 1. For the EMLSR mode enabled in a single radio non-AP MLD, the STA(s) affiliated with the non-AP MLD that operates on the enabled link(s) that corresponds to the bit position(s) of the EMLSR Link Bitmap subfield equal to 0 shall be in the doze state if a non-AP STA affiliated with the non-AP MLD that operates on one of the EMLSR links is in the awake state.

When a non-AP MLD with dot11EHTEMLSROptionActivated equal to true (re)associates with an AP MLD, the EMLSR mode is disabled by default.

When a non-AP MLD is operating in EMLSR mode on the EMLSR links, the non-AP STAs operating on the EMLSR links and affiliated with the non-AP MLD shall not operate in dynamic SM power save mode) on the EMLSR links.

When a non-AP MLD is operating in the EMLSR mode with an AP MLD supporting the EMLSR mode, the following applies:
a) The non-AP MLD shall be able to listen on the EMLSR link(s), by having its affiliated non-AP STA(s) corresponding to those links in the awake state. The listening operation includes CCA and receiving the initial Control frame of frame exchanges that are initiated by the AP MLD. A non-AP STA operating on one of the EMLSR links can change its power management mode and follows the power management procedure. A non-AP STA can listen on one of the EMLSR links in active mode or in PS mode when it is in the awake state.
b) An AP affiliated with the AP MLD that initiates frame exchanges that are neither group addressed Data nor group addressed Management frames with the non-AP MLD on one of the EMLSR links shall begin the frame exchanges by transmitting the initial Control frame to the non-AP MLD. For example. MU-RTS Trigger frame or BSRP Trigger frame may be used as the initial Control frame to initiate the frame exchanges.
c) A non-AP STA affiliated with a non-AP MLD that is in the listening operation and that receives an MU-RTS Trigger Frame or BSRP Trigger frame addressed to it shall transmit a response frame except when the frame exchanges initiated by the initial Control frame on one of the EMLSR links overlap with group addressed frame transmissions on the other EMLSR link where the non-AP STA intends to receive the group addressed frames.
d) After receiving the initial Control frame of frame exchanges and transmitting an immediate response frame as a response to the initial Control frame, a non-AP STA affiliated with the non-AP MLD that was listening on the corresponding link shall be able to transmit or receive frames on the link on which the initial Control frame was received and shall not transmit or receive on the other EMLSR link(s) until the end of the frame exchanges, and subject to its spatial stream capabilities, operation mode, and the minimum MAC frame padding duration of the Padding field of the initial Control frame, the non-AP STA affiliated with the non-AP MLD shall be capable of receiving a PPDU that is sent using more than one spatial stream on the link on which the initial Control frame was received a SIFS after the end of its response frame transmission solicited by the initial Control frame. During the frame exchanges, the other AP(s) affiliated with the AP MLD shall not transmit frames to the other non-AP STA(s) affiliated with the non-AP MLD on the other EMLSR link(s).
e) The AP affiliated with the AP MLD should transmit before the TXNAV timer expires another initial Control frame addressed to the non-AP STA affiliated with the non-AP MLD if the AP intends to continue the frame exchanges with the STA and did not receive the response frame from this STA for the most recently transmitted frame that requires an immediate response after a SIFS.
f) Any one of the non-AP STAs affiliated with the non-AP MLD that is operating on one of the EMLSR links may initiate frame exchanges with the AP MLD.

A non-AP STA affiliated with a non-AP MLD that is operating in the EMLSR mode can receive Beacon frames at scheduled beacon transmission times (i.e., TBTT).

Hereinafter, contents regarding traffic indication map (TIM) are described.

The TIM shall identify the STAs for which traffic is pending and buffered in the AP. This information is coded in a *partial virtual bitmap*. In addition, the TIM contains an indication whether non-SYNRA group addressed traffic is pending. Every STA is assigned an AID by the AP as part of the association process. AID 0 is reserved to indicate the presence of buffered non-GCR-SP group addressed BUs that will be delivered using MPDUs with an RA other than a SYNRA but that are not delivered using group AID. The AP shall identify those STAs for which it is prepared to deliver38 buffered BUs by setting bits in the TIM's partial virtual bitmap that correspond to the appropriate AIDs.

Two different TIM types are distinguished: TIM and DTIM. After a DTIM, the AP shall transmit buffered non-GCR-SP group addressed BUs that will be delivered using MPDUs with an RA other than a SYNRA, before transmitting any individually addressed frames. The AP may additionally deliver these BUs using group AID.

The AP shall transmit a TIM with every Beacon frame except when the frame is scheduled for transmission in a TSBTT that is not a TBTT. Every dot11DTIMPeriod, a TIM of type DTIM is transmitted within a Beacon frame, rather than an ordinary TIM. An S1G AP with dot11ShortBeaconInterval equal to true may include a TIM in a Beacon frame that is scheduled for transmission in a TSBTT that is not a TBTT. An S1G AP with dot11ShortBeaconInterval equal to true may transmit a TIM of type DTIM in an S1G Beacon frame every dot11ShortBeaconDTIMPeriod.

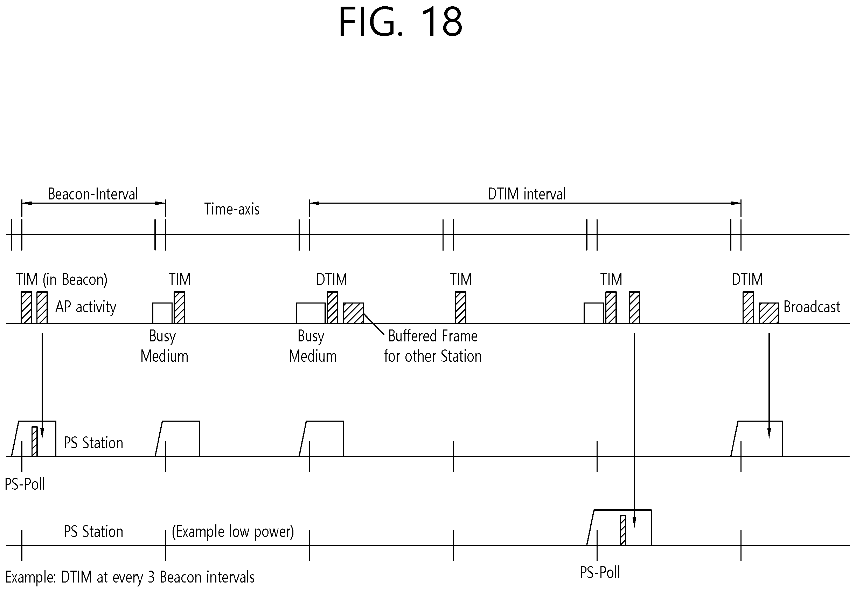

FIG. 18 shows an example of power management operation according to an embodiment of the present disclosure.

Referring to FIG. 18, the AP and STA activity under the assumption that a DTIM is transmitted once every three TIMs is illustrated. The top line in FIG. 18 represents the time axis, with the beacon interval shown together with a DTIM Interval of three beacon intervals. The second line depicts AP activity. The AP schedules Beacon frames for transmission every beacon interval, but the Beacon frames may be delayed if there is traffic at the TBTT. This is indicated as "busy medium" on the second line. For the purposes of FIG. 18, the important fact about Beacon frames is that they contain TIMs, some of which are DTIMs. The second STA with ReceiveDTIMs equal to false does not power-on its receiver for all DTIMs.

The third and fourth lines in FIG. 18 depict the activity of two STAs operating with different power management requirements. Both STAs power-on their receivers when they need to listen for a TIM. This is indicated as a rampup of the receiver power prior to the TBTT. The first STA, for example, powers up its receiver and receives a TIM in the first Beacon frame; that TIM indicates the presence of a buffered BU for the receiving STA. The receiving STA then generates a PS-Poll frame, which elicits the transmission of the buffered BU from the AP. Non-GCR-SP group addressed BUs are sent by the AP subsequent to the transmission of a DTIM beacon.

Meanwhile, in general, APs may always maintain an active state in order to provide high throughput and fast service to associated STAs, and may perform frame exchange using as high a bandwidth and as large a number of spatial streams as possible. Since APs may be supplied with power at all times, the need for reduction of power consumption may be relatively small for an AP. However, since the power actually consumed by an AP is considerable, the maintenance and management cost of a network may increase. In addition, for a battery-operated AP (e.g., a mobile AP), battery life needs to be considered. Accordingly, there is a need to reduce the power consumption of an AP. Furthermore, considering the multi-link operation introduced in IEEE 802.11be and the introduction of a multi-AP coordination network in IEEE 802.11bn, since the number of links and/or STAs operated by each multi-link device (MLD) may increase, the power consumption of an AP may further increase. Therefore, a method/apparatus for reducing the power of an AP needs to be newly designed, and an integrated framework applicable to all STAs may also be considered.

In the present disclosure, a "frame exchange (FE)" may include a frame transmission and/or reception operation between a STA and a STA. The STA may be an AP or a non-AP STA. Here, the frame may include various types of frames (e.g., a data frame, a control frame, a management frame).

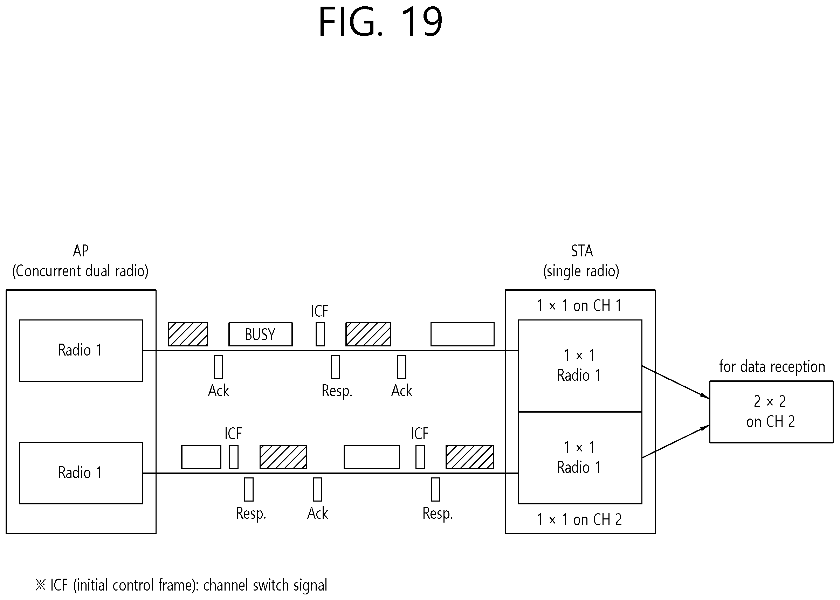

FIG. 19 shows an example of an EMLSR operation.

The enhanced multi-link single radio (EMLSR) was introduced in IEEE 802.11be for efficient multi-link operation of a single radio non-AP MLD. A non-AP MLD operating in the EMLSR mode may perform a listening operation on the EMLSR link(s) that are in the awake state. The listening operation at this time may include reception of an initial control frame (ICF) for frame exchange(s) initiated from the AP MLD and/or CCA. That is, the non-AP MLD may perform a listening operation on one or more links using multiple receive chains of a single radio, and then exchange frames with the AP on the link on which the ICF has been received.

During such a listening operation, the STA may reduce the power consumption of the STA by transmitting (TX)/receiving (RX) a PPDU with a restricted configuration (e.g., a non-HT (duplicate) PPDU, 20 MHz-only, 1 spatial stream) and/or by performing CCA for a restricted bandwidth. That is, an operational characteristic such as the listening operation of the EMLSR may be utilized as one of the states of a power save mode (e.g., an awake state, a doze state). Specifically, by applying the characteristics of the EMLSR operation as shown in FIG. 19 to an individual link, the power consumed on each link during a listening state may be reduced. An AP/STA operating in a power saving (PS) mode on one or more links may have a low capability/configuration in the listening state, and may switch to a capability/configuration capable of using a wide bandwidth and a large number of spatial streams in order to exchange frames fast. That is, for such a switching of the capability/configuration, an ICF may be defined and/or utilized similarly to the EMLSR. Such a PS is also similar to a dynamic spatial multiplexing (SM) PS, and since it is not a scheme that achieves power saving based on a scheduled time, it may be classified as a dynamic PS.

Therefore, a frame sequence needs to be newly defined that enables an AP/STA, which stays in a listening state in order to reduce power consumption and then receives an ICF included in a PPDU transmitted with a restricted capability/configuration, to exchange frames with the AP/STA that transmitted the corresponding ICF.

The present disclosure provides a frame sequence between one or more STAs operating in a dynamic PS. Specifically, the present disclosure provides a frame sequence for an AP operating in a dynamic PS to perform a downlink (DL) multi-user (MU) transmission to a plurality of associated STAs, and provides an ICF for initiating the frame sequence. Through such a frame sequence/ICF, the AP may perform a DL MU transmission while reducing power consumption.

In the present disclosure, a dynamic PS may mean a PS in which a PS mode/state is changed based on detection of a specific event and/or transmission/reception of a specific frame.

For example, when a STA (e.g., an AP/non-AP STA) operating in a dynamic PS detects an ICF transmission event in a listening state (e.g., detects that there is data to be transmitted/received), transmits an ICF, and/or receives an ICF, the STA may transition to a frame exchange state and may perform a frame exchange in the frame exchange state. For example, when a STA receives an ICF in a listening state, the STA may transition from the listening state to a frame exchange state, perform CCA/back-off for a wide bandwidth, and transmit an initial control response (ICR) based on a normal capability/configuration. When the frame exchange is completed (e.g., when an ACK frame is transmitted/received), the STA may transition back to the listening state.

In the present disclosure, a listening state may mean a state in which a STA (e.g., an AP/non-AP STA) operates with a restricted capability/configuration, and receives an ICF based on the restricted capability/configuration and/or performs CCA/back-off for a restricted bandwidth.

In the present disclosure, a frame exchange state may mean a state in which a STA (e.g., an AP/non-AP STA) operates with a normal capability/configuration, and performs a frame exchange based on the normal capability/configuration. For example, the frame exchange state may include an awake state.

The specific designations (names) proposed in the present disclosure may be changed, and are not limited thereto.

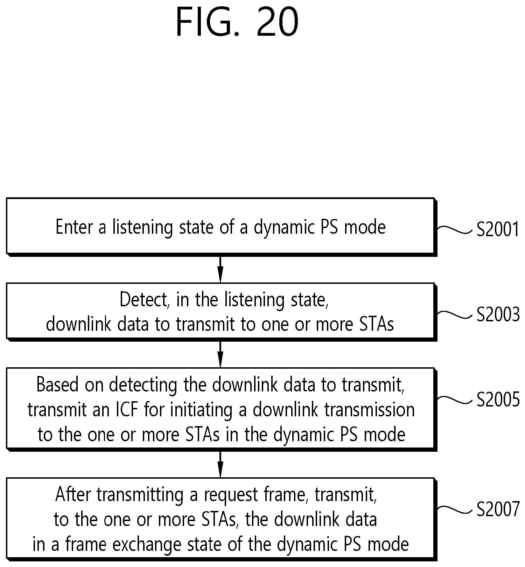

FIG. 20 shows an example of a method performed by an AP for dynamic power save according to an embodiment of the present disclosure.

Referring to FIG. 20, in step S2001, the AP may enter a listening state of a dynamic power save (PS) mode.

In step S2003, the AP may detect, in the listening state, downlink data to transmit to one or more stations (STAs).

In step S2005, based on detecting the downlink data to transmit, the AP may transmit an initial control frame (ICF) for initiating a downlink transmission in the dynamic PS mode to the one or more STAs.

In step S2007, after transmitting the ICF, the AP may transmit the downlink data to the one or more STAs in a frame exchange state of the dynamic PS mode.

According to various embodiments, the listening state may be a state in which the AP performs a listening operation based on a restricted capability. The frame exchange state may be a state in which the AP performs a frame exchange based on a normal capability.

According to various embodiments, the listening operation may include at least one of monitoring reception of an ICF, receiving an ICF, or performing a channel access procedure for a restricted bandwidth. The channel access procedure may include at least one of a clear access assessment (CCA) or a back-off.

According to various embodiments, the restricted capability may include at least one of a restricted bandwidth or a restricted number of spatial streams. The normal capability may include at least one of a bandwidth greater than the restricted bandwidth or a number of spatial streams greater than the restricted number of spatial streams.

According to various embodiments, the normal capability may include at least one of a capability supported by the STA or a capability supported by the AP.

According to various embodiments, the capability supported by the STA may include a maximum capability of the STA. The capability supported by the AP may include a maximum capability of the AP.

According to various embodiments, based on detecting the downlink data to transmit, the AP may transition from the listening state to the frame exchange state. The AP may transmit the ICF to the one or more STAs, based on a normal capability in the frame exchange state.

According to various embodiments, the ICF may include at least one of a block acknowledge request (BAR) frame, a multi-user (MU)-BAR trigger frame, or a buffer status report poll (BSRP) trigger frame.

According to various embodiments, a BAR Type subfield of the BAR frame may be set to one of reserved values to indicate that the ICF is an ICF for initiating a downlink transmission in the dynamic PS mode.

According to various embodiments, the AP may receive a response frame for the ICF. After receiving the response frame, the AP may transmit the downlink data to the one or more STAs, based on a normal capability in the frame exchange state.

According to various embodiments, the AP may transition from the listening state to the frame exchange state, in response to the transmission of the ICF or the reception of the response frame.

According to various embodiments, the response frame may include information indicating that the response frame is an initial control response (ICR) frame for an ICF for initiating a downlink transmission in the dynamic PS mode.

According to various embodiments, the response frame may include a block acknowledge (BA) frame. A BA Type subfield of the BA frame may be set to one of reserved values to indicate that the response frame is an ICR frame for an ICF for initiating a downlink transmission in the dynamic PS mode.

According to various embodiments, the AP may receive an acknowledge (ACK) frame for the DL data from the one or more STAs, based on the normal capability in the frame exchange state. The AP may transition from the frame exchange state to the listening state, in response to the reception of the ACK frame.

According to various embodiments, the one or more STAs may include at least one of a STA in the dynamic PS mode or a STA that has transmitted, to the AP, information indicating that a power management mode is in an active state.

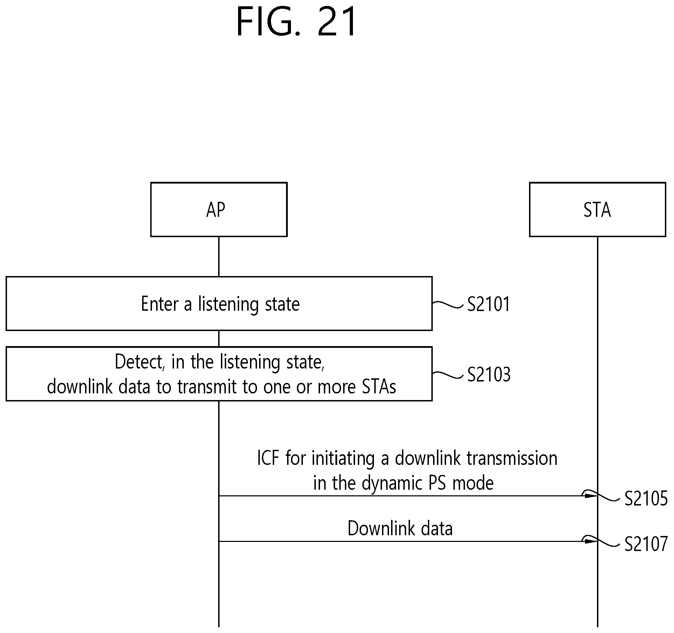

FIG. 21 shows an example of a signal flow between an AP and a STA for dynamic power save according to an embodiment of the present disclosure.

Referring to FIG. 21, in step S2101, the AP may enter a listening state of a dynamic power save (PS) mode.

In step S2103, the AP may detect, in the listening state, downlink data to transmit to the STA.

In step S2105, the STA may receive an initial control frame (ICF) for initiating a downlink transmission in the dynamic PS mode from the AP. The AP may transmit the ICF to the STA, based on detecting the downlink data to transmit.

In step S2107, after receiving the ICF, the STA may receive the downlink data from the AP. After transmitting the ICF, the AP may transmit the downlink data to the STA in a frame exchange state of the dynamic PS mode.

Hereinafter, a detailed implementation for dynamic power save in DL MU transmission is described.

The present disclosure defines a frame sequence for a DL MU transmission between an AP and STAs when one or more STAs are operating in a dynamic PS, and a type of an initial control frame (ICF) in the corresponding frame sequence. The present disclosure deals with a frame sequence for a DL MU transmission depending on whether a non-AP STA operates in a dynamic PS when an AP is operating in a dynamic PS.

### I. ICF for a DL MU transmission in a dynamic PS operation

An ICF for a DL MU transmission in a dynamic PS operation needs to be designed.

In some implementations, among trigger frames (TFs), an MU-BAR (that is, type = 2) trigger frame may be utilized as an ICF for a dynamic PS operation. For example, a new type of MU-BAR TF that may be utilized for a DL MU transmission in a dynamic PS operation may be implemented using a reserved value (e.g., 4-5 or 7-9 or 11-15) among the BAR types.

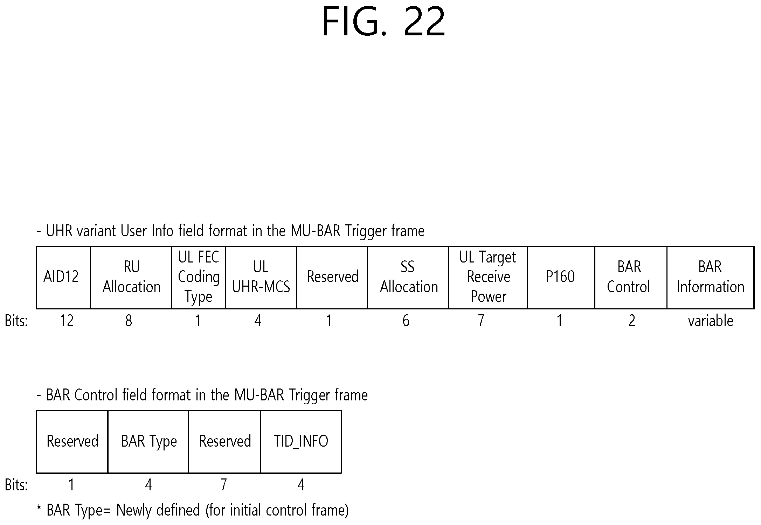

FIG. 22 shows an example of an ICF format for a DL MU transmission in a dynamic PS operation according to an embodiment of the present disclosure. In FIG. 22, the designations (names) of the fields and/or the number of bits may be changed, and new fields for supporting a dynamic PS operation may also be added.

Referring to FIG. 22, the BAR Type of the MU-BAR TF may indicate that the corresponding MU-BAR TF is an ICF/MU-BAR TF for a DL MU transmission in a dynamic PS operation. For example, one of the reserved values (e.g., 4-5 or 7-9 or 11-15) of the BAR Type (sub)field may be utilized to indicate that the corresponding MU-BAR TF has been transmitted as an ICF in a dynamic PS operation or to indicate that it is an ICF/MU-BAR TF for a DL MU transmission in a dynamic PS operation. A new type may be defined, by utilizing a reserved type (that is, a BAR type corresponding to a reserved value), to indicate that the corresponding MU-BAR TF is an ICF/MU-BAR TF for a DL MU transmission in a dynamic PS operation or to indicate that it is an ICF in a dynamic PS operation.

In addition, a new type of block acknowledge (BA) frame may be implemented for a response to the MU-BAR TF.

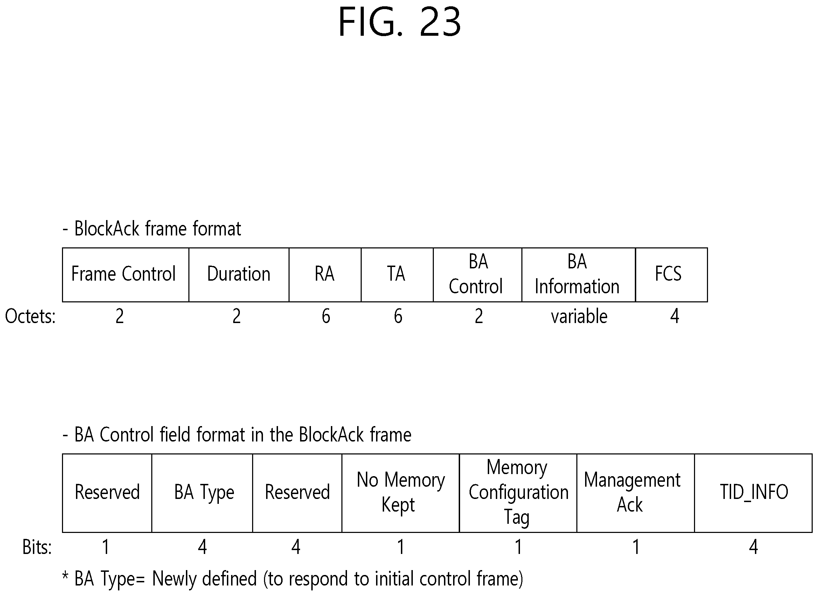

FIG. 23 shows an example of a response frame format for an ICF in a dynamic PS operation according to an embodiment of the present disclosure.

Referring to FIG. 23, a BA frame may be used as a response frame for an ICF/MU-BAR TF transmitted for a DL MU transmission in a dynamic PS operation. The designations (names) of the fields and/or the number of bits may be changed, and new fields for supporting a dynamic PS operation may also be added.

The BA Type of the BA frame may indicate that the corresponding BA frame is a response frame for an ICF/MU-BAR TF transmitted for a DL MU transmission in a dynamic PS operation. For example, one of the reserved values (e.g., 4-5 or 9 or 12-15) of the BA Type (sub)field may be utilized to indicate that the corresponding BA frame is a response frame for an ICF/MU-BAR TF transmitted for a DL MU transmission in a dynamic PS operation. A new type may be defined, by utilizing a reserved type (that is, a BA type corresponding to a reserved value), to indicate that the corresponding BA frame is a response frame for an MU-BAR TF for a DL MU transmission in a dynamic PS operation.

### II. Procedure for a DL MU transmission in a dynamic PS operation

Hereinafter, a frame sequence for a DL MU transmission depending on whether a non-AP STA operates in a dynamic PS when an AP is operating in a dynamic PS is described.

### 1. When an AP and non-AP STAs operate in a dynamic PS

In some implementations, non-AP STAs may support a dynamic PS operation of an AP. For example, the non-AP STAs may transmit an ICF (e.g., a control frame) to the AP. For example, the non-AP STAs may receive an ICF from the AP and transmit a response frame for the ICF after a SIFS.

In some implementations, an AP operating in a dynamic PS may recognize that the recipient STAs of a DL MU transmission are not currently (e.g., at the time of transmitting an ICF to the corresponding STAs) in the doze state. For example, when the AP is in the listening state of the dynamic PS, the non-AP STAs may always be in the listening state or the awake state.

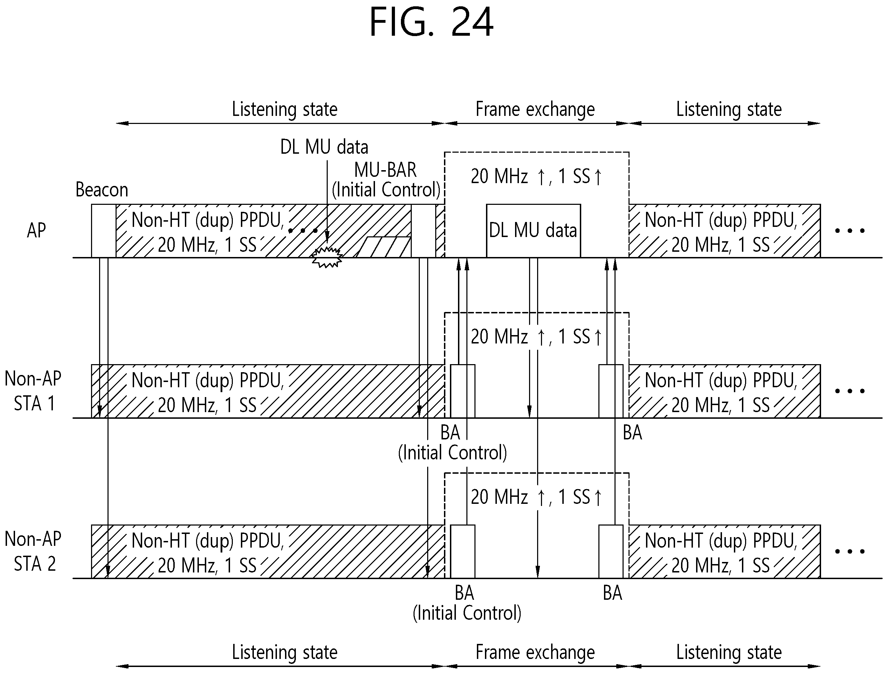

FIG. 24 shows a first example of a frame sequence for a DL MU transmission in a dynamic PS operation according to an embodiment of the present disclosure. In FIG. 24, it is assumed that an AP and non-AP STAs operate in a dynamic PS.

Referring to FIG. 24, an AP associated with STAs supporting a dynamic AP PS may perform a listening operation (e.g., ICF reception and/or a channel access procedure (e.g., (random) back-off/CCA)) based on a restricted capability/configuration (e.g., 20 MHz, 1 SS, non-HT (duplicate) PPDU TX/RX) in a listening state in order to reduce power consumption. When DL data for a plurality of STAs is delivered from a higher layer, the AP may start a random back-off procedure and obtain a TXOP through contention. The AP that has obtained the TXOP may transmit, to the non-AP STAs, a PPDU having a restricted capability/configuration (e.g., a non-HT (duplicate) PPDU, 20 MHz, 1 SS) including an ICF (e.g., an MU-BAR TF whose BAR Type is set to ICF, a BSRP TF), in order to transition the non-AP STAs from the listening state to a frame exchange state.

For example, the AP may transition from the listening state to a state having a high capability (e.g., the awake state/the frame exchange state) for the transmission of the ICF, and may transmit the ICF in the state having the high capability. At this time, the ICF included in the PPDU having the restricted capability/configuration (e.g., a non-HT (duplicate) PPDU) may be transmitted through a bandwidth of more than or equal to 20 MHz, but the receiving non-AP STAs in the listening state may receive the corresponding PPDU via 20 MHz.

For example, the AP may transition from the listening state to a state having a high capability (e.g., the awake state/the frame exchange state) in response to the transmission of the ICF (e.g., an MU-BAR TF whose BAR Type is set to ICF, a BSRP TF) and/or the reception of a response frame for the ICF (e.g., a BA frame whose BA Type is set to ICF).

The STAs that have received the ICF may change their capability/configuration for TX/RX based on information included in a recently received Beacon frame, pre-configured information and/or information included in the ICF delivered from the AP. The STAs that have transitioned from the listening state to a high capability/configuration (e.g., 80 MHz/1 SS or 160 MHz/2 SS) for a frame exchange with the AP may transmit a response frame for the ICF (e.g., a BA frame) to the AP. The AP that has received the response frames from the non-AP STAs may start a DL MU transmission and transmit PPDU(s) including DL data to the plurality of non-AP STAs in the state having the high capability. When BA frames indicating the end of the frame exchange between the AP and the STAs are transmitted from the STAs, the AP and the STAs may transition back to the listening state in order to reduce unnecessary power consumption.

### 2. When an AP operates in a dynamic PS and the power management mode of at least one non-AP STA may be different

In some implementations, non-AP STAs may support a dynamic PS operation of an AP. For example, the non-AP STAs may transmit an ICF to the AP. For example, the non-AP STAs may receive an ICF from the AP and transmit a response frame for the ICF after a SIFS.

In some implementations, an AP operating in a dynamic PS may not recognize the state of the corresponding STA unless it receives separate signaling (e.g., a PS-Poll frame, PM bit = 0 or 1, an ICF) from the receiver STAs of a DL MU transmission. For example, when the AP is in the listening state of the dynamic PS, the non-AP STA may operate in a separate power management mode and may be in an individual/independent power management state. For example, when a specific STA transmits a frame with PM bit = 0, the AP may recognize that the corresponding STA is in the awake state until it transmits a frame with PM bit = 1.

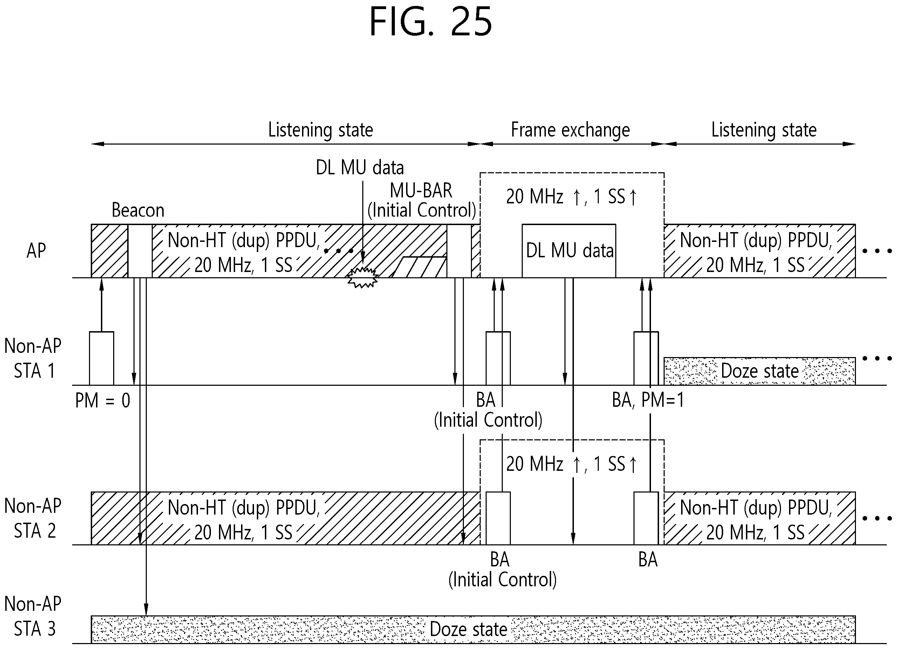

FIG. 25 shows a second example of a frame sequence for a DL MU transmission in a dynamic PS operation according to an embodiment of the present disclosure. In FIG. 25, it is assumed that an AP operates in a dynamic PS and the power management mode of at least one non-AP STA may be different.

Referring to FIG. 25, an AP associated with STAs supporting a dynamic AP PS may perform a listening operation (e.g., ICF reception and/or CCA) with a restricted capability/configuration (e.g., 20 MHz, 1 SS, non-HT (duplicate) PPDU TX/RX) in a listening state in order to reduce power consumption. Specific STA(s) (e.g., non-AP STA 1) may transmit a frame with PM bit = 0 to the AP to inform that it is currently in the awake state. The frame with PM bit = 0 at this time may be included in a PPDU having a restricted capability/configuration and transmitted. When DL data for a plurality of STAs is delivered from a higher layer, the AP may perform a random back-off procedure and obtain a TXOP through contention. The AP that has obtained the TXOP may transmit, to target non-AP STAs, a PPDU having a restricted capability/configuration (e.g., a non-HT (duplicate) PPDU, 20 MHz, 1 SS) including an ICF (e.g., an MU-BAR TF whose BAR Type is set to ICF, a BSRP TF), in order to transition at least one STA (e.g., a non-AP STA) from the listening state to a frame exchange state and/or to start a DL (MU) transmission. The target STAs at this time may be STAs operating in a dynamic PS and/or STAs that have informed the awake state by transmitting a frame with PM bit = 0.

For example, the AP may transition from the listening state to a state having a high capability (e.g., the awake state/the frame exchange state) for the transmission of the ICF, and may transmit the ICF in the state having the high capability. At this time, the ICF included in the PPDU having the restricted capability/configuration (e.g., a non-HT (duplicate) PPDU) may be transmitted through a bandwidth of more than or equal to 20 MHz, but the receiving non-AP STAs in the listening state may receive the corresponding PPDU via 20 MHz.

For example, the AP may transition from the listening state to a state having a high capability (e.g., the awake state/the frame exchange state) in response to the transmission of the ICF (e.g., an MU-BAR TF whose BAR Type is set to ICF, a BSRP TF) and/or the reception of a response frame for the ICF (e.g., a BA frame whose BA Type is set to ICF).

The STAs that have received the ICF (e.g., an MU-BAR TF whose BAR Type is set to ICF, a BSRP TF) may change their capability/configuration for TX/RX based on information included in a recently received Beacon frame, pre-configured information and/or information included in the ICF delivered from the AP. A STA operating in a dynamic PS (e.g., non-AP STA 2) that has transitioned from the listening state to a high capability/configuration (e.g., 80 MHz/1 SS or 160 MHz/2 SS) for a frame exchange with the AP may transmit a response frame for the ICF (e.g., a BA frame) to the AP. In addition, a STA in the awake state supporting the dynamic PS operation of the AP (e.g., non-AP STA 1) may also transmit a response frame for the ICF (e.g., a BA frame) to the AP. The AP that has received the response frames from the non-AP STAs may start a DL MU transmission in the state having the high capability (e.g., the frame exchange state/the awake state) and transmit PPDU(s) including DL data to the plurality of non-AP STAs. When BA frames indicating the end of the frame exchange between the AP and the STAs are transmitted from the STAs, the AP operating in the dynamic PS and some STAs may transition back to the listening state in order to reduce unnecessary power consumption. Likewise, STAs that intend to enter the doze state may enter the doze state after transmitting a BA frame in which the PM bit is set to 1, and may achieve greater power saving.

The present disclosure defines a frame sequence for an AP operating in a dynamic PS to perform a DL MU transmission to a plurality of associated STAs.

For example, when an AP and non-AP STAs operate in a dynamic PS, the AP/STA may operate with a restricted capability/configuration in the listening state in a period other than a period in which a frame exchange is performed, and through this, unnecessary power consumption can be reduced.

For example, when the AP operates in a dynamic PS and the power management mode of at least one non-AP STA may be different, the AP or some STAs may reduce power consumption in the listening state, and some non-AP STAs in the doze state may achieve greater power saving.

The technical features of the present disclosure described above can be applied to various devices and methods. For example, the technical features of the present disclosure described above can be performed/supported by the devices of FIG. 1 and/or FIG. 5. For example, the technical features of the present disclosure described above can be applied only to a part of FIG. 1 and/or FIG. 5. For example, the technical features of the present disclosure described above can be implemented based on the processing chips 114, 124 of FIG. 1, or implemented based on the processors 111, 121 and the memories 112, 122 of FIG. 1, or implemented based on the processor 510 and the memory 520 of FIG. 5.

For example, the processor 121 and/or processing chip 124 of FIG. 1 may be configured to execute instructions stored in the memory 122 to perform operations performed by the AP in the present disclosure. The operations comprise: entering a listening state of a dynamic power save (PS) mode; detecting, in the listening state, downlink data to transmit to one or more stations (STAs); based on detecting the downlink data to transmit, transmitting an initial control frame (ICF) for initiating a downlink transmission in the dynamic PS mode to the one or more STAs; and after transmitting the ICF, transmitting the downlink data to the one or more STAs in a frame exchange state of the dynamic PS mode.

For example, the processor 111, the processing chip 114 of FIG. 1 and/or the processor 510 of FIG. 5 may be configured to execute instructions stored in the memory 112, 520 to perform operations performed by the STA in the present disclosure. The operations comprise: receiving, from an access point (AP), an initial control frame (ICF) for initiating a downlink transmission in a dynamic power save (PS) mode; and after receiving the ICF, receiving downlink data from the AP, wherein the ICF is transmitted from the AP based on the AP detecting the downlink data to transmit to the STA in a listening state of the dynamic PS mode, and wherein the downlink data is transmitted from the AP while the AP is in a frame exchange state of the dynamic PS mode.

The technical features of the present disclosure can be implemented based on a computer readable medium (CRM) (e.g., non-transitory CRM). For example, the CRM in the present disclosure may comprise at least one CRM having stored thereon a program code implementing instructions executed by at least one processor.

For example, the CRM may be the memory 122 of FIG. 1 and/or a separate external memory/storage medium/disk. The CRM may store instructions that perform operations performed by the AP in the present disclosure based on being executed by a processor (e.g., the processor 121 and/or the processing chip 124 of FIG. 1). The operations comprise: entering a listening state of a dynamic power save (PS) mode; detecting, in the listening state, downlink data to transmit to one or more stations (STAs); based on detecting the downlink data to transmit, transmitting an initial control frame (ICF) for initiating a downlink transmission in the dynamic PS mode to the one or more STAs; and after transmitting the ICF, transmitting the downlink data to the one or more STAs in a frame exchange state of the dynamic PS mode.

For example, the CRM may be the memory 112 of FIG. 1, the memory 520 of FIG. 5, and/or a separate external memory/storage medium/disk. The CRM may store instructions that perform operations performed by the STA in the present disclosure based on being executed by a processor (e.g., the processor 111, the processing chip 114 of FIG. 1, and/or the processor 510 of FIG. 5). The operations comprise: receiving, from an access point (AP), an initial control frame (ICF) for initiating a downlink transmission in a dynamic power save (PS) mode; and after receiving the ICF, receiving downlink data from the AP, wherein the ICF is transmitted from the AP based on the AP detecting the downlink data to transmit to the STA in a listening state of the dynamic PS mode, and wherein the downlink data is transmitted from the AP while the AP is in a frame exchange state of the dynamic PS mode.

The foregoing technical features of this disclosure are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The present disclosure may have various advantageous effects.

For example, when an AP and non-AP STAs operate in a dynamic PS, the AP/STA may operate with a restricted capability/configuration in the listening state in a period other than a period in which a frame exchange is performed, and through this, unnecessary power consumption may be reduced.

For example, when the AP operates in a dynamic PS and the power management mode of at least one non-AP STA may be different, the AP or some STAs may reduce power consumption in the listening state, and some non-AP STAs in the doze state may achieve greater power saving.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus, and technical features in method claim(s) and apparatus claim(s) can be combined to be implemented or performed in a method.

## Claims

1. A method comprising:
entering, by an access point (AP), a listening state of a dynamic power save (PS) mode;
detecting, by the AP in the listening state, downlink data to transmit to one or more stations (STAs);
based on detecting the downlink data to transmit, transmitting, by the AP, an initial control frame (ICF) for initiating a downlink transmission in the dynamic PS mode to the one or more STAs; and
after transmitting the ICF, transmitting, by the AP, the downlink data to the one or more STAs in a frame exchange state of the dynamic PS mode.

2. The method of claim 1, wherein the listening state is a state in which the AP performs a listening operation based on a restricted capability, and
wherein the frame exchange state is a state in which the AP performs a frame exchange based on a normal capability.

3. The method of claim 2, wherein the listening operation comprises at least one of monitoring reception of an ICF, receiving an ICF, or performing a channel access procedure for a restricted bandwidth, and
wherein the channel access procedure comprises at least one of a clear access assessment (CCA) or a back-off.

4. The method of claim 2, wherein the restricted capability includes at least one of a restricted bandwidth or a restricted number of spatial streams, and
wherein the normal capability includes at least one of a bandwidth greater than the restricted bandwidth or a number of spatial streams greater than the restricted number of spatial streams.

5. The method of claim 2, wherein the normal capability includes at least one of a capability supported by the STA or a capability supported by the AP.

6. The method of claim 5, wherein the capability supported by the STA includes a maximum capability of the STA, and
wherein the capability supported by the AP includes a maximum capability of the AP.

7. The method of claim 1, further comprising transitioning, based on detecting the downlink data to transmit by the AP, from the listening state to the frame exchange state,
wherein the transmitting of the ICF includes transmitting, by the AP, the ICF to the one or more STAs, based on a normal capability in the frame exchange state.

8. The method of claim 1, wherein the ICF includes at least one of a block acknowledge request (BAR) frame, a multi-user (MU)-BAR trigger frame, or a buffer status report poll (BSRP) trigger frame.

9. The method of claim 8, wherein a BAR Type subfield of the BAR frame is set to one of reserved values to indicate that the ICF is an ICF for initiating a downlink transmission in the dynamic PS mode.

10. The method of claim 1, further comprising receiving, by the AP, a response frame for the ICF,
wherein the transmitting of the downlink data comprises, after the AP receives the response frame, transmitting the downlink data to the one or more STAs, based on a normal capability in the frame exchange state.

11. The method of claim 10, further comprising transitioning, by the AP, from the listening state to the frame exchange state, in response to the transmission of the ICF or the reception of the response frame.

12. The method of claim 10, wherein the response frame includes information indicating that the response frame is an initial control response (ICR) frame for an ICF for initiating a downlink transmission in the dynamic PS mode.

13. The method of claim 10, wherein the response frame includes a block acknowledge (BA) frame, and
wherein a BA Type subfield of the BA frame is set to one of reserved values to indicate that the response frame is an ICR frame for an ICF for initiating a downlink transmission in the dynamic PS mode.

14. The method of claim 1, further comprising:
receiving, by the AP from the one or more STAs, an acknowledge (ACK) frame for the DL data, based on the normal capability in the frame exchange state; and
transitioning, by the AP, from the frame exchange state to the listening state, in response to the reception of the ACK frame.

15. The method of claim 1, wherein the one or more STAs include at least one of a STA in the dynamic PS mode or a STA that has transmitted, to the AP, information indicating that a power management mode is in an active state.

16. An access point (AP) comprising:
a transceiver;
a memory; and
at least one processor operatively coupled to the transceiver and the memory,
wherein the memory stores instructions that, based on being executed by the at least one processor, perform operations comprising:
entering a listening state of a dynamic power save (PS) mode;
detecting, in the listening state, downlink data to transmit to one or more stations (STAs);
based on detecting the downlink data to transmit, transmitting an initial control frame (ICF) for initiating a downlink transmission in the dynamic PS mode to the one or more STAs; and
after transmitting the ICF, transmitting the downlink data to the one or more STAs in a frame exchange state of the dynamic PS mode.

17. An apparatus comprising:
at least one processor; and
at least one memory operatively coupled to the at least one processor,
wherein the at least one memory stores instructions that, based on being executed by the at least one processor, perform operations comprising:
entering a listening state of a dynamic power save (PS) mode;
detecting, in the listening state, downlink data to transmit to one or more stations (STAs);
based on detecting the downlink data to transmit, transmitting an initial control frame (ICF) for initiating a downlink transmission in the dynamic PS mode to the one or more STAs; and
after transmitting the ICF, transmitting the downlink data to the one or more STAs in a frame exchange state of the dynamic PS mode.

18. A non-transitory computer readable medium (CRM) having stored thereon a program code implementing instructions that, based on being executed by at least one processor, perform operations comprising:
entering a listening state of a dynamic power save (PS) mode;
detecting, in the listening state, downlink data to transmit to one or more stations (STAs);
based on detecting the downlink data to transmit, transmitting an initial control frame (ICF) for initiating a downlink transmission in the dynamic PS mode to the one or more STAs; and
after transmitting the ICF, transmitting the downlink data to the one or more STAs in a frame exchange state of the dynamic PS mode.

19. A method comprising:
receiving, by a station (STA) from an access point (AP), an initial control frame (ICF) for initiating a downlink transmission in a dynamic power save (PS) mode; and
after receiving the ICF, receiving, by the STA, downlink data from the AP,
wherein the ICF is transmitted from the AP based on the AP detecting the downlink data to transmit to the STA in a listening state of the dynamic PS mode, and
wherein the downlink data is transmitted from the AP while the AP is in a frame exchange state of the dynamic PS mode.

20. A station (STA) comprising:
a transceiver;
a memory; and
at least one processor operatively coupled to the transceiver and the memory,
wherein the memory stores instructions that, based on being executed by the at least one processor, perform operations comprising:
receiving, from an access point (AP), an initial control frame (ICF) for initiating a downlink transmission in a dynamic power save (PS) mode; and
after receiving the ICF, receiving downlink data from the AP,
wherein the ICF is transmitted from the AP based on the AP detecting the downlink data to transmit to the STA in a listening state of the dynamic PS mode, and
wherein the downlink data is transmitted from the AP while the AP is in a frame exchange state of the dynamic PS mode.
